# EUROPEAN PATENT APPLICATION

(11) **EP 4 020 189 A1**
(43) Date of publication of application: **29.06.2022**
(21) Application number: 21198172.5
(22) Date of filing: 22.09.2021
(51) Int. Cl.: G06F 9/38

(54) **METHODS, SYSTEMS, AND APPARATUSES FOR A SCALABLE RESERVATION STATION IMPLEMENTING A SINGLE UNIFIED SPECULATION STATE PROPAGATION AND EXECUTION WAKEUP MATRIX CIRCUIT IN A PROCESSOR**

(30) Priority: 24.12.2020 US 202017134154
(71) Applicant: Intel Corporation, Santa Clara, CA 95054 (US)
(72) Inventor: Wong, Wing Shek, Austin, TX 78733 (US); Agarwal, Vikash, Austin, TX 78737 (US); Vitu, Charles, Austin, TX 78745 (US); Sarode, Madhura, Austin, TX 78739 (US)
(74) Representative: Samson & Partner Patentanwälte mbB

(57) **Abstract**

Systems, methods, and apparatuses relating to a scalable reservation station circuit implementing a single unified speculation state propagation and execution wakeup matrix in a processor are described. In one embodiment, a hardware processor core includes a decoder circuit to decode one or more instructions into a first micro-operation to load data from a data cache, a second micro-operation dependent on the first micro-operation, and a third micro-operation dependent on the second micro-operation; an execution circuit to execute the first micro-operation, the second micro-operation, and the third micro-operation; and a reservation station circuit comprising a load speculation tracker circuit and coupled between the decoder circuit and the execution circuit, the load speculation tracker circuit to, for a reservation station entry of the third micro-operation, track progress of the first micro-operation in the data cache to generate a cancellation indication for the third micro-operation in response to a miss of the data in the data cache for the first micro-operation, wherein the load speculation tracker circuit is to begin to track the progress of the first micro-operation in the data cache in response to a dispatch of the first micro-operation into the data cache..

## Description

### TECHNICAL FIELD

The disclosure relates generally to electronics, and, more specifically, an embodiment of the disclosure relates to a scalable reservation station circuit implementing a single unified speculation state propagation and execution wakeup matrix in a processor.

### BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (I/O). It should be noted that the term instruction herein may refer to a macro-instruction, e.g., an instruction that is provided to the processor for execution, or to a micro-instruction, e.g., an instruction that results from a processor's decoder decoding macro-instructions.

### BRIEF DESCRIPTION OF THE DRAWINGS

The present disclosure is illustrated by way of example and not limitation in the figures of the accompanying drawings, in which like references indicate similar elements and in which:
**Figure 1** illustrates a processor core having an allocation circuit comprising a reservation station circuit according to embodiments of the disclosure.
**Figure 2** illustrates a data cache having multiple pipelined stages according to embodiments of the disclosure.
**Figure 3** illustrates a reservation station circuit according to embodiments of the disclosure.
**Figure 4** illustrates example timing paths in the reservation station circuit of Figure 3 according to embodiments of the disclosure.
**Figure 5** illustrates a unified speculation state propagation and execution wakeup matrix circuit according to embodiments of the disclosure.
**Figure 6** illustrates load speculation tracker circuit according to embodiments of the disclosure.
**Figure 7** illustrates reservation station circuitry coupled to a plurality of clusters of execution circuits according to embodiments of the disclosure.
**Figure 8** is a flow diagram illustrating operations for utilizing a reservation station circuit of a processor according to embodiments of the disclosure.
**Figure 9A** is a block diagram illustrating both an exemplary in-order pipeline and an exemplary register renaming, out-of-order issue/execution pipeline according to embodiments of the disclosure.
**Figure 9B** is a block diagram illustrating both an exemplary embodiment of an in-order architecture core and an exemplary register renaming, out-of-order issue/execution architecture core to be included in a processor according to embodiments of the disclosure.
**Figure 10A** is a block diagram of a single processor core, along with its connection to the on-die interconnect network and with its local subset of the Level 2 (L2) cache, according to embodiments of the disclosure.
**Figure 10B** is an expanded view of part of the processor core in Figure 10A according to embodiments of the disclosure.
**Figure 11** is a block diagram of a processor that may have more than one core, may have an integrated memory controller, and may have integrated graphics according to embodiments of the disclosure.
**Figure 12** is a block diagram of a system in accordance with one embodiment of the present disclosure.
**Figure 13** is a block diagram of a more specific exemplary system in accordance with an embodiment of the present disclosure.
**Figure 14****,** shown is a block diagram of a second more specific exemplary system in accordance with an embodiment of the present disclosure.
**Figure 15****,** shown is a block diagram of a system on a chip (SoC) in accordance with an embodiment of the present disclosure.
**Figure 16** is a block diagram contrasting the use of a software instruction converter to convert binary instructions in a source instruction set to binary instructions in a target instruction set according to embodiments of the disclosure.

### DETAILED DESCRIPTION

In the following description, numerous specific details are set forth. However, it is understood that embodiments of the disclosure may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

A (e.g., hardware) processor (e.g., having one or more cores) may execute (e.g., user-level) instructions (e.g., a thread of instructions) to operate on data, for example, to perform arithmetic, logic, or other functions. For example, software may include a plurality of instructions (e.g., macro-instructions) that are provided to a processor (e.g., a core or cores thereof) that then executes (e.g., decodes and executes) the plurality of instructions to perform the corresponding operations. In certain embodiments, a processor includes circuity (e.g., one or more decoder circuits) to translate (e.g., decode) an instruction into one or more micro-operations (µops or micro-ops), for example, with these micro-operations directly executed by the hardware (e.g., by execution circuits). One or more micro-operations corresponding to an instruction (e.g., macro-instruction) may be referred to as a microcode flow for that instruction. A micro-operation may be referred to as a micro-instruction, for example, a micro-instruction that resulted from a processor's decoding of a macro-instruction. In one embodiment, the instructions are 64 bit and/or 32 bit instructions of an instruction set architecture (ISA). In one embodiment, the instructions are (e.g., 64 bit and/or 32 bit) instructions of an Intel^{®} instruction set architecture (ISA). In certain embodiments, the translation of an instruction into one or more micro-operations is associated with the instruction fetch and/or decode portion of a processor's pipeline.

In certain processors, the operations (e.g., micro-operations) that are to be executed (e.g., received from one or more instruction decode queues) are sent on one or more (e.g., allocation) lanes to a circuit (e.g., allocation circuit) that allocates execution resources for the operations. In certain embodiments, an allocation circuit is responsible for allocating a micro-operation to an execution circuit (e.g., a reservation station circuit corresponding to that execution circuit). In certain embodiments, an allocation circuit sends certain information for a micro-operation to a reservation station circuit, e.g., so that the reservation station circuit can monitor the source (e.g., and destination) operand(s) for that micro-operation and indicate when that micro-operation is to be dispatched to the execution circuit for execution. An instruction (e.g., one or more micro-operations thereof) may update register(s), e.g., data register(s). In certain embodiments, a single instruction is implemented as single micro-operation (µοp). In certain embodiments, a single instruction is implemented as a set of two or more micro-operations (µops).

One or more instructions may thus form a dependency chain therein. For example, one or more instructions may be decoded into a first (e.g., in program order) load micro-operation to load data (e.g., from a data cache) so that a dependent, second (e.g., immediately next in program order) micro-operation operates on that data. In certain embodiments, a reservation station circuit is to track the dependency chain of micro-operations (µops).

A reservation station (e.g., matrix scheduler) may include an (e.g., execution circuit) matrix (e.g., circuit) to track (e.g., input) operands for wakeup ready generation, logic circuitry to track load dependence for cancellation (e.g., for a load that misses in a data cache), a picker circuit to dispatch to execution ports based on a static port binding algorithm. However, such a reservation station may have the following limitations. To increase the micro-operation drain rate from the reservation station (RS) and execution bandwidth for a higher instructions per cycle (IPC) rate, an additional dispatch port from reservation station is used in certain embodiments, e.g., by scaling up the number of dispatch ports in reservation station. However, this significantly degrades a single cycle loop which includes both the wakeup execution matrix and the load dependence propagation logic, for example, where the execution wakeup matrix uses an extra line (e.g., a multiplexer) to listen to the additional dispatch port and accommodate for the extra delay (for example, wire delay, e.g., the extra resistive-capacitive (RC) delay). In one embodiment, a dependent micro-operation wakeup mechanism (e.g., via execution matrix) propagates a speculation status from a parent micro-operation to a child micro-operation via a broadcast mechanism when the parent is picked to dispatch to an execution circuit. A disadvantage is a single cycle timing path pick loop, that starts from:
Start loop:
   - > micro-operation (µοp) pick
   - > select (e.g., mux out) speculation status of picked micro-operation
   - > broadcast speculation status to all micro-operations in reservation station entries
   - > dependent micro-operation pickup speculation status via wakeup event from execution matrix hit
   - > cancel pick if speculation status resolves to be bad (e.g., a miss of data for the parent micro-operation). (E.g., stage speculation status locally per entry for later resolution if speculation status cannot be resolved yet)
   - > generate final pick
Go to Start loop

However, certain embodiments of such topology does not scale well with an increased number of reservation station entries and dispatch ports due to pick vector used to select (e.g., mux out) speculation status for picked micro-operation, heavy RC delay, and loading from broadcast.

Certain dependent micro-operation wakeup mechanisms are not compatible with a dynamic port binding scheduler. For example, where a micro-operation in a reservation station listens to a single pre-determined dispatch port (e.g., parent micro-operation is statically port bound and child micro-operation knows this before micro-operation insertion into reservation station) to capture speculation status from parent micro-operation. However dynamic port binding scheduler breaks this assumption in certain embodiments.

Further, simply increasing dispatch ports and number of execution units to increase execution bandwidth and drain rate results in an O(2n^2) increase in the number of single cycle (e.g., level 0) bypasses to obtain an execution result, and therefore degradation of a single cycle timing loop. Loading, RC delay, and gate delay seriously limits scaling in number of execution ports in certain embodiments.

In certain embodiments, a pick-2 (or higher) scheduler (for example, where a reservation station entry can dispatch to more than one port, e.g., in a same cycle) depends on some varieties of static and/or pseudo-dynamic port binding scheme. In certain embodiments, a true pick-2 scheduler that involves a serial timing path between primary and secondary picker is not feasible in practice. In certain embodiments, static port binding uses information before or at insertion of a micro-operation (e.g., entry) into a reservation station. For example, where dynamic execution information is not available, optimal port binding to minimize latency and to maximum drain rate is not possible. In certain embodiments, a semi-dynamic port binding scheme adjusts port assignment of pending micro-operation in a reservation station, e.g., where micro-operation port assignment is decided one or more cycles before schedule/pick cycle.

In certain embodiments, a bypass domain (e.g., a limited level 0 bypass between execution circuits (e.g., execution units)) concept helps timing of execution circuits, but does not mitigate a single cycle timing path pressure in RS matrix scheduler from additional dispatch ports. In one embodiment, a single cycle load speculation tracking timing loop is mitigated by using a load dependence matrix mechanism. But a load dependence matrix is an expensive structure in certain embodiments, for example, where the load dependence matrix structure is totally separate from an execution matrix. In certain embodiments, no structure (e.g., circuitry) is shared between a load dependence matrix and an execution matrix and their matrices have different widths. In certain embodiments, a load matrix has a high read and write port requirement. In certain embodiments, the number of read port is the allocation width times the number of source operands. In certain embodiments, the number of write port is the allocation width. In certain embodiments, each incoming micro-operation performs an expensive read-modify-write operation at reservation station (RS) insertion time. In certain embodiments, all load operations must probe into a column of load dependence matrix. In certain embodiments, a load matrix has a very high cost in area, power, and complexity. Furthermore, in certain embodiments a load matrix is a separate resource to manage, for example, to ensure the number of load matrix columns is sufficient to track a maximum number of inflight load micro-operations in a machine, e.g., where trading off a number of supported in-flight load results in a performance loss.

In certain embodiments, a way to resolve ambiguity problem of load speculation tracking in dynamic port binding design is to use multiple comparators (for example, to compare wakeup up physical source (psrc) identifier to physical destination (pdst) identifier) (e.g., in addition to an execution matrix), to uniquely identify true wake up parents in dynamic port binding scenario such that it is possible to propagate a load speculation status from a true parent to a dependent child. For example, a producer identifier of a micro-operation source operand from a RS entry may specify two possible execution ports from which a producer micro-operation may dispatch. In this case, two comparators are required in certain embodiments to uniquely identify actual wakeup sources, e.g., where in a more optimal design, one comparator is used along with an execution wakeup matrix. Another solution is to use a separate load dependence matrix, e.g., where load speculation status propagation does not rely on wakeup event and therefore it is not affected by dynamic port binding scheme. However, this has its own disadvantages as described above. In certain embodiments, using an additional comparator instead of a load matrix to allow compatibility with dynamic port binding scheme has a very high area and power cost, e.g., effectively doubling or tripling (e.g., for a reservation station that monitors three sources per reservation station entry) area and power of execution matrix. In certain embodiments, load speculation tracking remains a single cycle path, but the timing degrades because additional level of logic circuitry to ambiguate true parent using these comparators.

In certain embodiments, a semi-dynamic port binding scheme is used to improve upon static port binding, e.g., where port assignment is updated based on some load balancing algorithm during micro-operation residence in a RS. In certain embodiments, since micro-operation port assignment and micro-operation picking are done independently in static or semi-dynamic port binding scheme, micro-operations scheduled for two execution ports may not be the two oldest ready micro-operations (e.g., not based upon age-order sequence among ready micro-operations). For example, a reservation station may not be able to optimally pick the two oldest ready micro-operations for execution on two execution ports. In certain embodiments, a static or semi-dynamic port binding scheme cannot achieve the performance of true age-based dynamic port binding scheme. In certain embodiments, where a subset of execution circuit(s) is slower (e.g., certain execution circuit(s) may not support a level 0 bypass for timing reasons), the sub-optimal port binding of a micro-operation to a slow execution circuit, from static or semi-dynamic port binding scheme, incurs significant performance penalty. In other words, a slower execution circuit may only work well in conjunction with a true age-based dynamic port binding scheme.

In certain embodiments, a topology to scale to a high number of execution ports is to introduce bypass domain concept between execution circuits, e.g., where only level 1 or higher (e.g., two or more cycles) bypass is allowed between clusters but not level 0 (e.g., single cycle) bypass. However, a bypass domain concept (e.g., to limit level 0 bypass(es) between execution circuits (e.g., ALUs)) does not work well with static and semi-dynamic port binding scheme and results in significant performance loss since execution information is not available to port binding logic to avoid bypass penalty.

In certain embodiment, scaling to a higher number of RS dispatch ports increase the number of single cycle timing paths and logic depth and increases loading of a single cycle timing path in RS matrix scheduler.

Embodiments herein overcome the above issues by implementing a true age-based dynamic port binding scheme (e.g., true age-based dynamic port binding lazy pick-2 scheme). Embodiments herein are directed to a scalable reservation station implementing single unified speculation state propagation and execution wakeup matrix and a true age-based dynamic port-binding (e.g., lazy) pick-2 scheduler with execution circuit (e.g., arithmetic logic unit (ALU)) execution port clustering.

Embodiments herein are directed to a new class of reservation station design and execution unit clustering implementing one or more of the following. (1) A single unified speculation propagation and execution (e.g., execution circuit) wakeup matrix using shared dependence information for both load dependence tracking and micro-operation wakeup. Embodiments of this design are compatible with dynamic port binding, unlike a load speculation status tracking via micro-operation wakeup event. Embodiments herein do not form a single cycle timing loop path, e.g., in contrast to load speculation status tracking (e.g., as a dependent micro-operation wakeup mechanism (e.g., via execution matrix) that propagates a speculation status from a parent micro-operation to a child micro-operation via a broadcast mechanism when the parent is picked to dispatch to an execution circuit). (2) A true age-based dynamic port binding pick-two primary and lazy secondary scheduler for dynamic scheduling to two execution ports per reservation station, e.g., where a dynamic port binding scheme allows use of a (e.g., "lazy", as discussed herein) secondary picker (e.g., with performance approaching a non-lazy pick-2 scheme). Embodiments herein double the number of RS dispatch ports (and therefore dispatch bandwidth) without introducing any additional single cycle timing path compared to a single pick scheme. (3) By taking advantage of this new (e.g., lazy) pick-2 scheme, embodiments herein double the number of execution circuits (e.g., ALU execution units) using execution circuit (e.g., ALU execution unit) clustering topology, for example, without adding any level 0 data bypass and/or single cycle timing path. Instead of replicating execution ports, certain embodiments herein group individual execution circuits as execution circuit clusters. In one embodiment, each execution circuit cluster consists of primary and secondary execution circuits, e.g., where port-binding is dynamic within a cluster (e.g., but not between clusters). (4) In certain embodiments, dynamic port binding, (e.g., lazy) pick-2, primary execution circuit, and secondary execution circuit in an execution circuit (e.g., ALU execution unit) cluster work together to double execution bandwidth without degrading a critical single cycle timing path on the first order. In certain embodiments, a unified speculation propagation and execution matrix circuit removes a critical single cycle timing loop from a RS matrix scheduler. Embodiments herein propose a scalable design to deepen and widen a reservation station and to increase the number of (e.g., ALU) execution ports, e.g., and avoid cost and difficultly of increasing the number of reservation station entries, number of dispatch ports, and/or execution circuits discussed above.

Embodiments herein utilize a true dynamic port-binding scheme to extract dynamic performance and maximum design flexibility. Embodiments herein implement a true age-based dynamic port binding pick-2 scheduler. Embodiments herein implement a unified speculation status propagation and execution matrix to enable scaling of RS entry and dispatch ports (e.g., that is compatible with dynamic port binding) without using a costly load dependence matrix (e.g., circuit). Embodiments herein provide a path to scale up width and depth of out-of-order processors (e.g., cores). Embodiments herein utilize a dynamic port binding scheme, execution unit (e.g., circuit) clustering, and a (e.g., lazy) pick-2 scheme to at least double the number of dispatch/execution ports without adding a new single cycle timing path in RS scheduler or adding level 0 bypass data and related single cycle path from additional execution circuits. Embodiments herein allow for an asymmetric execution circuit (e.g., ALU) design to be used efficiently to optimize timing, area, and power. Embodiments herein avoid difficulties of a static port-binding scheme that optimally assigns micro-operations to execution circuits (e.g., ALUs) with asymmetric functionalities due to a lack of dynamic execution information. Embodiments herein allow scaling up of depth and width of RS, dispatch ports, and execution circuits to extract maximum single thread performance, e.g., with manageable cost and timing impact.

Embodiments herein are directed to a unified speculation status propagation and execution (wakeup) matrix (e.g., circuit), for example, instead of using a separate load speculation tracking mechanism. In certain embodiments, load speculation tracking via unified speculation propagation matrix is compatible with dynamic port binding (e.g., resolving port ambiguity problem), does not have a single cycle timing path to propagate speculation status (e.g., in contrast to speculation status propagation via a wakeup/broadcast event), removes the need for a (e.g., power and area hungry) load dependence matrix, e.g., by re-using an execution matrix in an innovative manner, removes the need for an additional comparator per source per RS entry for disambiguation in dynamic port binding scenario (e.g., doubling comparators in dynamic pick-2 scheme) (e.g., where an additional comparator is power hungry and uses significant area), and/or allows a reservation station (e.g., circuit) to scale depth and width since it removes single cycle timing path required for load speculation tracking.

Embodiments herein are directed a dynamic port binding lazy pick-2 scheme and execution port clustering scheme. In certain embodiments, a dynamic port binding lazy pick-2 scheme and/or execution port clustering scheme includes a true age-based dynamic port binding pick-2 scheme port that binds and picks together for best performance (e.g., unlike static or semi-dynamic port binding scheme which port binds and picks independently), allows a critical dependent micro-operation to be scheduled as soon as possible over any (e.g., either) of a plurality of execution ports as needed without restriction as in static or semi-dynamic port binding scheme (e.g., in order words, port utilization is maximized to execute dependent micro-operation once they are ready), a true age-based picker maximizes performance since oldest ready micro-operation has highest probability to be in the critical dependence chain, a double RS dispatch port without introducing any additional single cycle timing path compared to single pick scheme on first order (e.g., where a dynamic port binding scheme allow use of lazy secondary picker with performance approaching true non-lazy pick-2 scheme), by taking advantage of lazy pick-2 scheme, doubles a number of execution circuits (e.g., ALU execution units) without introducing additional (e.g., any) level 0 data bypass and single cycle timing path using execution circuit clustering topology, and/or allow scaling of a number of dispatch ports and execution circuits (e.g., ALU execution units), e.g., where additional lazy dispatch ports and secondary (e.g., ALU) execution circuits in an execution unit cluster do not participate in single cycle timing loop path.

For a first micro-operation that is a load and a second micro-operation that directly depends on the load, certain embodiments herein allow the second micro-operation to track the load dependence status of the first micro-operation, e.g., where the second micro-operation is cancelled if first micro-operation is bad (e.g., miss in cache, etc.). Certain embodiments herein utilize a speculation status propagation circuit (e.g., speculation status propagation matrix 304 circuit) to enable a child, grandchild, etc. of the second micro-operation (e.g., directly and/or indirectly dependent on the second-micro-operation, and therefore they are also indirect dependent of first micro-operation) to track their load speculation status and therefore allow for the child, grandchild, etc. of the second micro-operation to also be cancelled if the first micro-operation is bad (e.g., miss in cache), e.g., and needs to be cancelled and re-issued.

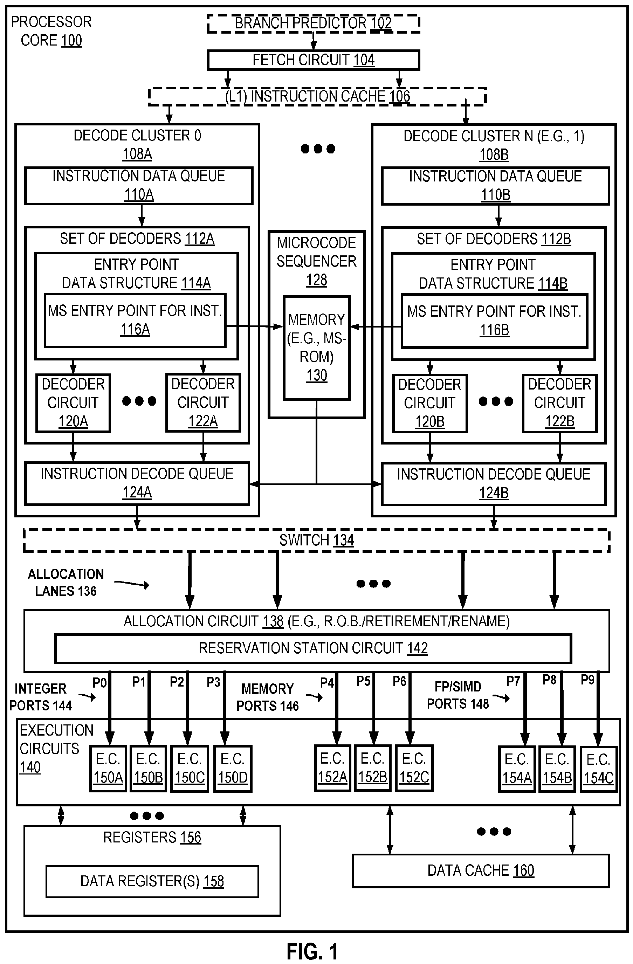

**Figure 1** illustrates a processor core 100 having an allocation circuit 138 comprising a reservation station circuit 142 according to embodiments of the disclosure. The reservation station circuit may be a single reservation station circuit (for example, shared between the execution circuits 140, e.g., execution input ports 144, 146, and/or 148) or a plurality of reservation station circuits (for example, one reservation station circuit of a plurality of reservation station circuits for each of a cluster of execution circuits or for each of the execution circuits 140, e.g., for each of execution input ports 144, 146, and/or 148).

The plurality of execution circuits 140 may include a plurality of different types of execution circuits, for example, integer type of execution circuit(s), memory type of execution circuit(s), floating point type of execution circuit(s), single instruction, multiple data (SIMD) (e.g., vector) type of execution circuit(s),or any combination thereof. Execution circuits 140 may include (i) a set of one or more integer type of execution circuits 150A, 150B, 150C, and 150D having corresponding integer ports 144 (labeled ports P0, P1, P2, and P3, respectively) (although shown as having four ports and four corresponding execution circuits of this type, any single or plurality may be utilized in certain embodiments), (ii) a set of one or more memory type of execution circuits 152A, 152B, and 152C, having corresponding memory ports 146 (labeled ports P4, P5, and P6, respectively) (although shown as having three ports and three corresponding execution circuits of this type, any single or plurality may be utilized in certain embodiments), and/or (iii) a set of one or more floating point type and/or SIMD type of execution circuits 154A, 154B, and 154C having corresponding floating point/SIMD ports 148 (labeled ports P7, P8, and P9, respectively) (although shown as having three ports and three corresponding execution circuits of this type, any single or plurality may be utilized in certain embodiments). Execution circuits may include one or more bypasses, e.g., where a child micro-operation receives one or more of its operand source data from a parent micro-operation via an execution circuit that executes the parent micro-operation having an output coupled to a bypass input of an execution circuit that is to execute the child micro-operation (e.g., for use when the result data has not been written back into a register file yet).

Operations to be executed (e.g., micro-operations from decoder circuits 120A-122A and/or decoder circuits 120B-122B) may be sent from allocation lanes 136 (for example, which may be any plurality, e.g., greater than the number of ports, equal to the number of ports, and/or less than the number or ports) to execution circuits 140 via ports 144, 146, and/or 148. In certain embodiments, the number of allocation lanes is referred to as the allocation width, e.g., the number of micro-operations which can be allocated (e.g., from instruction decode queue 124A and/or instruction decode queue 124B).

In certain embodiments, allocation circuit 138 is included to allocate the execution circuits 140 for the incoming micro-operations on allocation lanes 136. In certain embodiments, a reservation station circuit 142 is included to dispatch micro-operations when they are ready for execution, e.g., by sending the micro-operation on one or more issue (or dispatch) ports of the reservation station circuit 142 to a corresponding execution circuit of execution circuits 140. In one embodiment, a reservation station circuit 142 checks if the operand(s) for a micro-operation (e.g., as indicated in its reservation station entry) are available and if the corresponding execution circuit is available (e.g., free for use), and dispatches the micro-operation for execution in response to the operand(s) being available and the corresponding execution circuit being available. In certain embodiments, a processor utilizes register renaming to abstract a logical register from a physical register, e.g., with those logical register(s) utilized by reservation station (e.g., scheduler) circuit.

Processor core 100 may be one of a plurality of cores of a processor, e.g., of a system. Processor core 100 may include a branch predictor 102 (e.g., to predict one or more branches of the code (e.g., instructions) that are to be executed by the processor core 100. In certain embodiments, the branch predictor 102 (e.g., branch predictor circuit) learns from past behavior of branches to predict a next (e.g., incoming) branch. In certain embodiments, the branch predictor 102 predicts a proper subset of (e.g., contiguous in the original program order) instructions as a block of code (e.g., ending in a branch instruction). As one example, processor core 100 may receive code to execute and, in response, may divide the code into blocks.

In certain embodiments, the processor core 100 (e.g., via the fetch circuit 104 and/or branch predictor 102) may send the blocks of instructions to a decode cluster, for example, with a first block of instructions sent to decode cluster 0 108A, a (next in program order, e.g., younger) second block of instructions sent to decode cluster N 108B, etc. In a two-cluster example, a third (next in program order, e.g., younger) block of instructions may be sent to the next available decode cluster (e.g., after it has finished decode of its current block of instructions). In a two-cluster example, a third (next in program order, e.g., younger) block of instructions may be sent to the next decode cluster (e.g., to decoder cluster 108A in this example). Although two decode clusters 108A-108B are shown, it should be understood that three or more clusters may be utilized (e.g., where "N" is a positive integer greater than one).

In certain embodiments, each decode cluster includes two or more (e.g., superscalar x86) instruction decoders capable of decoding different basic blocks of code out-of-order with respect to each other, for example, with decode cluster 108A including a first decoder circuit 120A (e.g., decoder) and a second decoder circuit 122A (e.g., decoder), and decode cluster 108B including a second decoder circuit 120B (e.g., decoder) and a second decoder circuit 122B (e.g., decoder).

In certain embodiments, the branch predictor 102 of the processor core 100 divides code into individual blocks (e.g., of a set of contiguous instructions from the program). In certain embodiments, the fetch circuit 104 of the processor core 100 divides code into individual blocks (e.g., of a set of contiguous instructions from the program). The individual code blocks may then be sent to their respective decode cluster for decoding, for example, to a respective instruction data queue (e.g., instruction data queue 110A as an input queue for decode cluster 108A and instruction data queue 110B as an input queue for decode cluster 108B).

Optionally, processor core 100 includes a (e.g., level one) instruction cache 106, e.g., to cache one or more instructions without having to load them from memory. In certain embodiments, fetch circuit 104 sends code blocks to their respective decode cluster via instruction cache 106. Instruction cache 106 may include an instruction cache tag and/or instruction translation lookaside buffer (TLB).In certain embodiments, once the code blocks are sent to their corresponding decode cluster 108A-108B, each decode cluster begins decoding the code blocks in parallel (e.g., via the parallel decoder circuits therein). In certain embodiments, decode clusters operate independently of each other, so the blocks of code can be decoded out-of-order (e.g., out of program order).

In certain embodiments, the allocation circuit 138 is responsible for allocating the operations (e.g., micro-operations) to the execution circuits 140 (e.g., execution units), e.g., in the proper program order. The allocation circuit 138 may perform retirement and/or renaming, e.g., as well as including a re-order buffer (ROB) for reordering any out-of-order instruction (e.g., micro-operation) execution. In certain embodiments, processor core 100 includes a reservation station circuit 142 to cause a micro-operation to be sent (e.g., dispatched) to execution circuits 140 when that micro-operation is ready for execution, e.g., source operand(s) are available. In certain embodiments, reservation station circuit 142 includes a plurality of reservation station entries, e.g., one for each micro-operation awaiting execution.

Processor core depicts a first decode cluster 108A with a plurality of decoder circuits 120A-122A in a first set 112A and a second decode cluster 108B with a plurality of decoder circuits 120B-122B in a second set 112B. In certain embodiments, a (e.g., each) decoder circuit (120A, 122A, 120B, 122B) is to decode a (e.g., macro) instruction into a set of one or more micro-operations that are to be executed (e.g., as a primitive) by an execution circuit(s) 140. In certain embodiments, a decoder circuit (120A, 122A, 120B, 122B) is to decode certain (e.g., macro) instructions into a corresponding set of one or more micro-operations without utilizing a microcode sequencer 128 (e.g., a microcode sequencer separate from any decode cluster and/or decoder circuit) and/or decode other (e.g., macro) instructions (e.g., complex instruction set computer (CISC) instructions) into a corresponding set of one or more micro-operations by utilizing the microcode sequencer 128 (e.g., the microcode sequencer separate from any decode cluster and/or decoder circuit). In one embodiment, a decoder circuit (120A, 122A, 120B, 122B) is to output a certain number of micro-operation per cycle (e.g., one micro-operation per cycle and/or between one and four micro-operations per cycle). In certain embodiments, a "microcoded" instruction generally refers to an instruction where a decode cluster (e.g., set of decoders) requests the microcode sequencer 128 to load the corresponding set of one or more (e.g., plurality of) micro-operations (µops) from the microcode sequencer memory 130 (e.g., read-only memory (ROM)) into the decode pipeline (e.g., into the corresponding instruction decode queue), e.g., instead of producing that instruction's set of one or more micro-operations directly by a decoder circuit. For example, to implement some (e.g., complex) (e.g., x86) instructions, a microcode sequencer 128 is used to divide the instruction into a sequence of smaller (e.g., micro) operations (also referred to as micro-ops or µops).

In certain embodiments, each decode cluster (e.g., each decoder circuit in some embodiments) includes a data structure to store a corresponding entry point value (e.g., address) for one or more instructions into memory 130 of microcode sequencer 128 and/or a number of bits (e.g., the number of cycles to generate the corresponding micro-operations for an instruction and/or the number of micro-operations for the instruction). For example, (1) with data structure 114A of decode cluster 108A including one or more entries that each indicate (e.g., for a single instruction), an entry point 116A for an instruction and/or bits (e.g., a coded value) for the instruction and/or (2) with data structure 114B of decode cluster 108B including one or more entries that each indicate (e.g., for a single instruction), an entry point 116B for an instruction and/or bits (e.g., code) for the instruction. In certain embodiments, data structure 114A and data structure 114B are copies of each other, e.g., they include the same data. In one embodiment, data structure 114A and data structure 114B are loaded with their data at manufacturing time. In one embodiment, data structure 114A and data structure 114B are loaded with their data during processor boot, e.g., by executing Basic Input/Output System (BIOS) firmware or Unified Extensible Firmware Interface (UEFI) firmware.

After decoding of an instruction into its respective micro-operations (e.g., by decoder circuits or microcode sequencer), in certain embodiments they are stored in an instruction decode queue. In Figure 1 (e.g., at the end of the decode stage), decode cluster 108A includes instruction decode queue 124A (e.g., instruction queue) that receives respective micro-operations from decoder circuits 120A-122A and from microcode sequencer 128 (e.g., when decode cluster 108A is arbitrated access to memory 130) and decode cluster 108B includes instruction decode queue 124B (e.g., instruction queue) that receives respective micro-operations from decoder circuits 120B-122B and from microcode sequencer 128 (e.g., when decode cluster 108B is arbitrated access to memory 130).

Optionally, switch 134 is included to couple output(s) of instruction decode queues 124A-124B to allocation lanes 136 (e.g., input(s)) of allocation circuit 138. In certain embodiments, allocation circuit 138 is to send micro-operations from the instruction decode queues 124A-124B (e.g., in or out of program order) to an execution circuit of execution circuits 140 (e.g., via reservation station circuit 142). In certain embodiments, processor core 100 includes a reservation station circuit 142 to cause a micro-operation to be sent (e.g., dispatched) to execution circuits 140 when that micro-operation is ready for execution, e.g., source operand(s) are available. In certain embodiments, reservation station circuit 142 includes a plurality of reservation station entries, e.g., one for each micro-operation awaiting execution.

Certain execution circuits 140 (e.g., memory execution circuits 150A-154C) may access storage, e.g., registers 156 (e.g., data register(s) 158) and/or data cache 160 (e.g., one or more levels of a cache hierarchy). Once the resultants are generated by the execution circuits 140, a retirement circuit (e.g., within allocation circuit 138) may then retire a corresponding instruction.

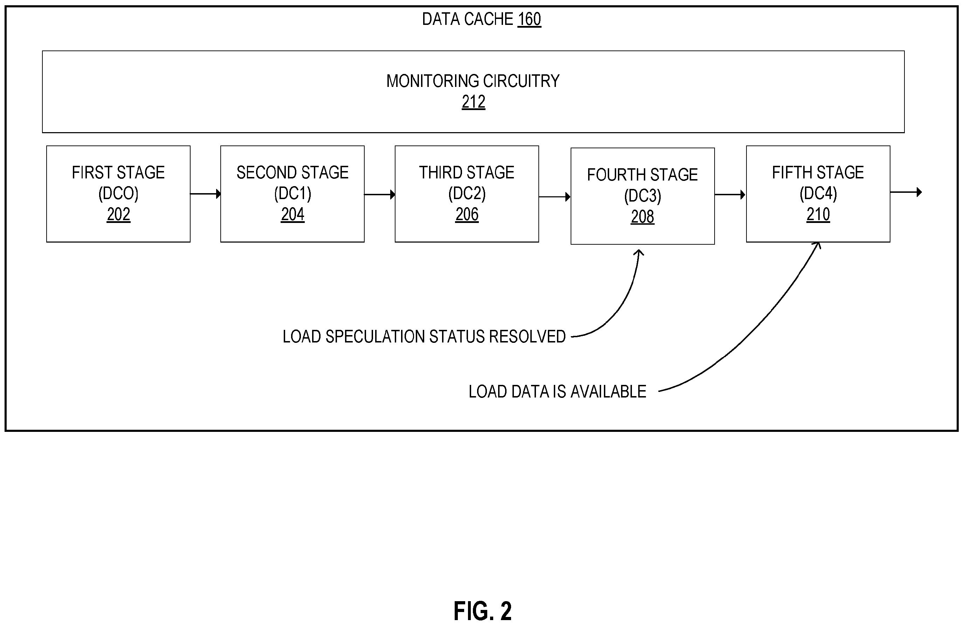

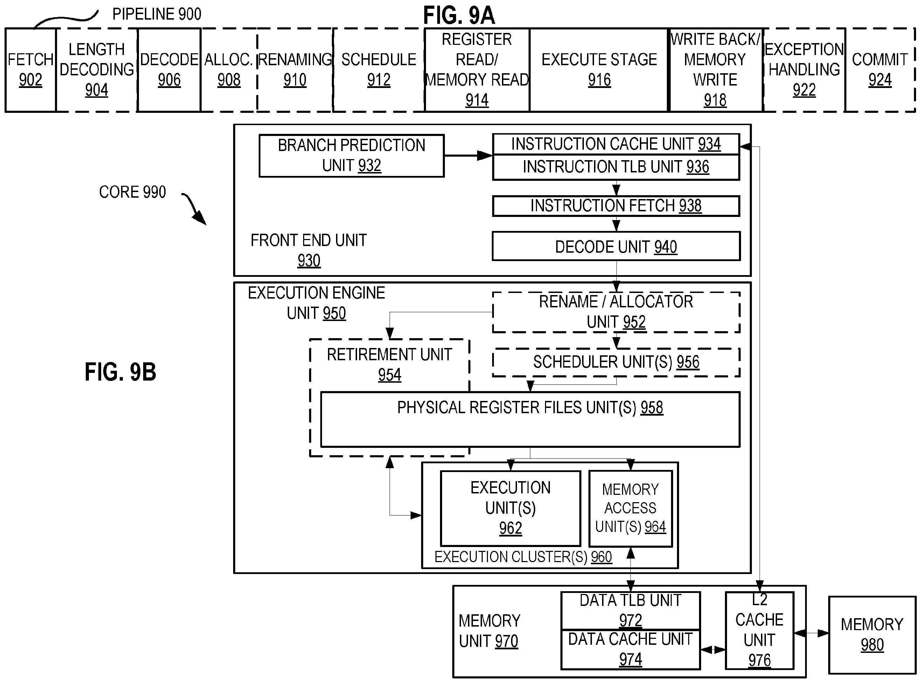

**Figure 2** illustrates a data cache 160 having multiple pipelined stages according to embodiments of the disclosure. For example, a first stage 202 (e.g., to receive a load request) (e.g., data cache 0 (DC0) stage), coupled to a second stage 204 (e.g., DC1), coupled to a third stage 206 (e.g., DC2), coupled to a fourth stage 208 (e.g., DC3) (e.g., where load speculation status is resolved), and fifth stage 210 (e.g., DC4) (for example, where that data that has been loaded is available, e.g., available for consumption by an execution circuit (e.g., in an execution pipeline). Although five stages are shown, it should be understood that a data cache may have any single or plurality of stages. Monitoring circuitry 212 may be included to monitor a status of the pending load request, e.g., if it is a "bad" request. Examples of bad requests (e.g., bad as determined during fourth stage 208) include a miss (e.g., not a hit) of the data in the cache(s), e.g., the data is not in the data cache. A miss may be caused by a prefetcher of the data cache 160 failing to correctly predict to prefetch that data into the data cache from other (e.g., system) memory. See, e.g., Figure 9B. A miss may be caused by an eviction of that data, e.g., where the cache is out of capacity and that data has been evicted.

For example, a second (e.g., arithmetic function or logic function) micro-operation may depend on a load type of micro-operation loading its data (e.g., into a register) from data cache 160.

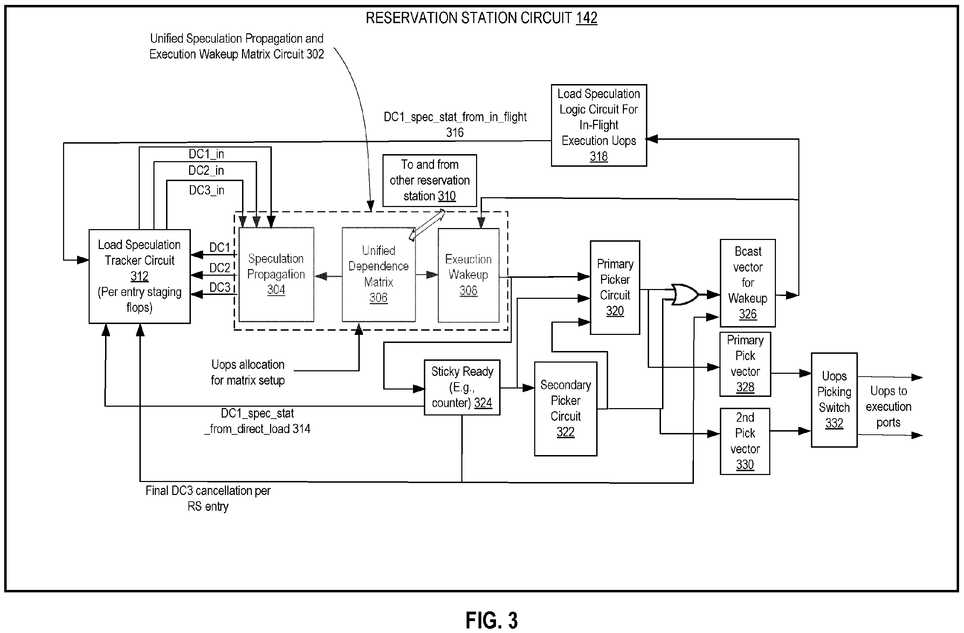

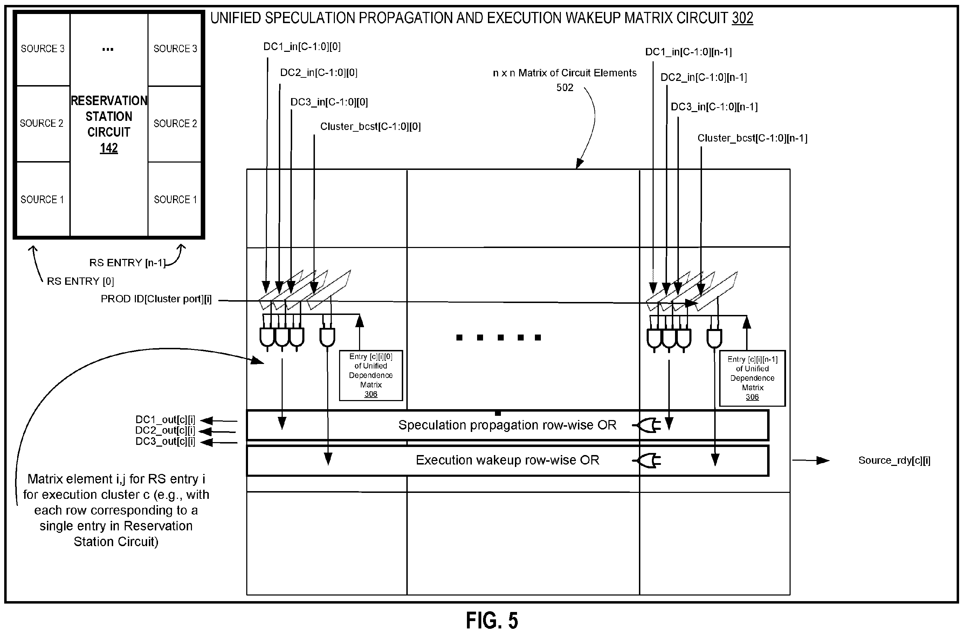

**Figure 3** illustrates a reservation station circuit 142 according to embodiments of the disclosure. Depicted reservation station circuit 142 includes a unified speculation status propagation and execution matrix circuit 302 that includes a unified dependence matrix 306, logically feeding both a speculation (e.g., status) propagation matrix 304 and execution wakeup 308 matrix logic circuitry. Note that speculation status propagation matrix 304 and execution wakeup matrix logic 308 are shown separately to highlight logically there is no cross-feeding in certain embodiments between execution wakeup and speculation status propagation even when both functions are using the same physical matrix structure. A single unified speculation status propagation and execution matrix circuit 302 is shown in Figure 5 (e.g., as one block of logic circuitry). In certain embodiments, speculation status propagation matrix 304, load speculation tracker circuit 312, and load speculation logic circuit for in-flight execution micro-operations 318 work together to track load dependence and generate a cancellation indication (e.g., for all RS entries) as soon as its load dependence is resolved. In certain embodiments (e.g., at the same time), execution wakeup matrix logic 308 generates ready for primary picker circuit 320 and secondary picker circuit 322, and sticky ready logic circuit 324 (e.g., counter), e.g., for all RS entries. In certain embodiments, a single unified matrix structure 302 provides ready generation (e.g., are operands ready) and load speculation tracking (e.g., is it a bad load such that speculation should be canceled) functionality.

In certain embodiments, primary picker circuit 320 uses sticky ready logic circuit 324 (e.g., indicating a micro-operation source was ready at least for one cycle earlier) and live ready (e.g., ready generated in the current cycle) from execution wakeup matrix logic 308. In certain embodiments, the secondary picker circuit uses only a ready indication from the sticky ready logic circuit 324. In certain embodiments, the secondary picker circuit 322 does not use live ready indication, so this is referred to as "lazy" picking, e.g., secondary picker circuit 322 is not involved in single cycle wakeup loop. In certain embodiments, secondary picker circuit 322 picks a micro-operation in parallel with execution wakeup matrix logic 308 generating ready bits for primary picker circuit 320. In one embodiment, sticky ready 324 (e.g., counter) is used to generate DC1_spec_stat_from_direct_load 314 for a micro-operation directly depending on load, e.g., and also to control data bypass circuit.

In one embodiment, secondary picker circuit 322 completes in less time than ready bits generated from execution wakeup matrix logic 308, e.g., and thus the secondary pick is hidden from the single cycle pick loop of the primary picker circuit 320 (e.g., scheduler). In certain embodiments, any micro-operation in reservation station circuit (e.g., loaded into unified dependence matrix 306 from allocation) can be picked by either primary picker circuit 320 or secondary picker circuit without any restriction, e.g., where pick order and execution port assignment is a function of micro-operation age and readiness without any port-binding information. Effectively, this implements true age-based dynamic port-binding pick-2 scheduler. Certain embodiments thus use a lazy secondary picker circuit 322 instead of a non-lazy secondary picker with little performance loss from true dynamic port binding.

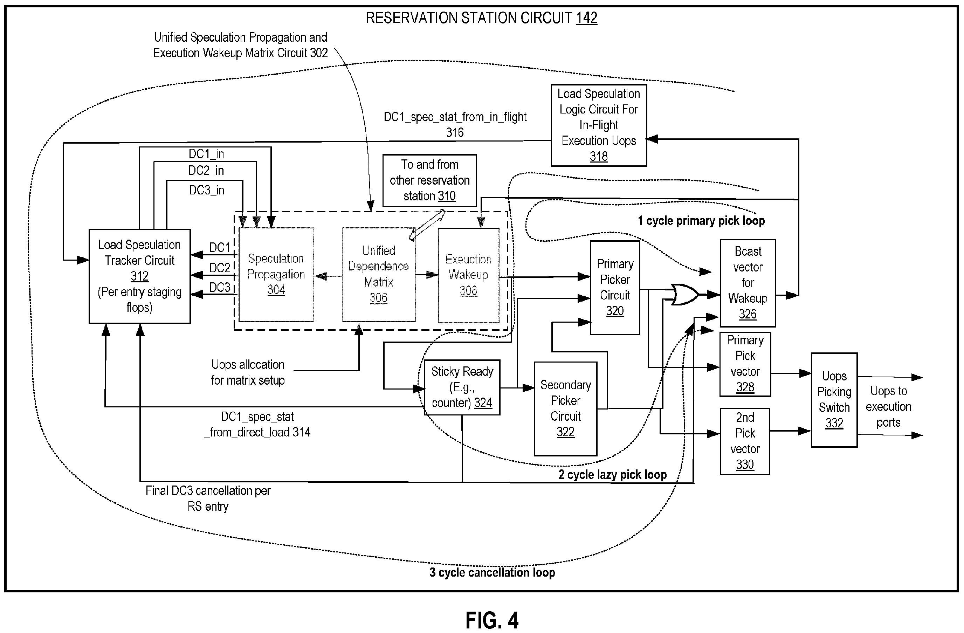

**Figure 4** illustrates example timing paths in the reservation station circuit of Figure 3 according to embodiments of the disclosure. In certain embodiments, single cycle pick timing loop only exists for primary picker circuit 320. For example, where lazy secondary picker circuit 322 only participates in a two cycle timing loop.

Referring to Figures 3 and 4, it should be apparent that the unified speculation status propagation and execution matrix circuit 302 achieves the same benefit of a separate load dependence matrix, but without the high cost of one. By re-using execution dependence matrix 306, embodiments herein directly propagate speculation status from a producer micro-operation to a dependent micro-operation. In certain embodiments, the direct speculation propagation status mechanism (e.g., speculation status propagation matrix 304) is a key enabler to implement dynamic port binding since it does not rely on propagating parent micro-operation speculation status from a pre-determined execution port via a matrix wakeup event. In certain embodiments, the direct speculation propagation status mechanism (e.g., speculation status propagation matrix 304) removes a single cycle timing path for load speculation cancellation logic circuitry, e.g., creating the three-cycle path as shown in Figure 4. In certain embodiments, cancellation indication may be sent to execution circuit(s) (e.g., port(s)).

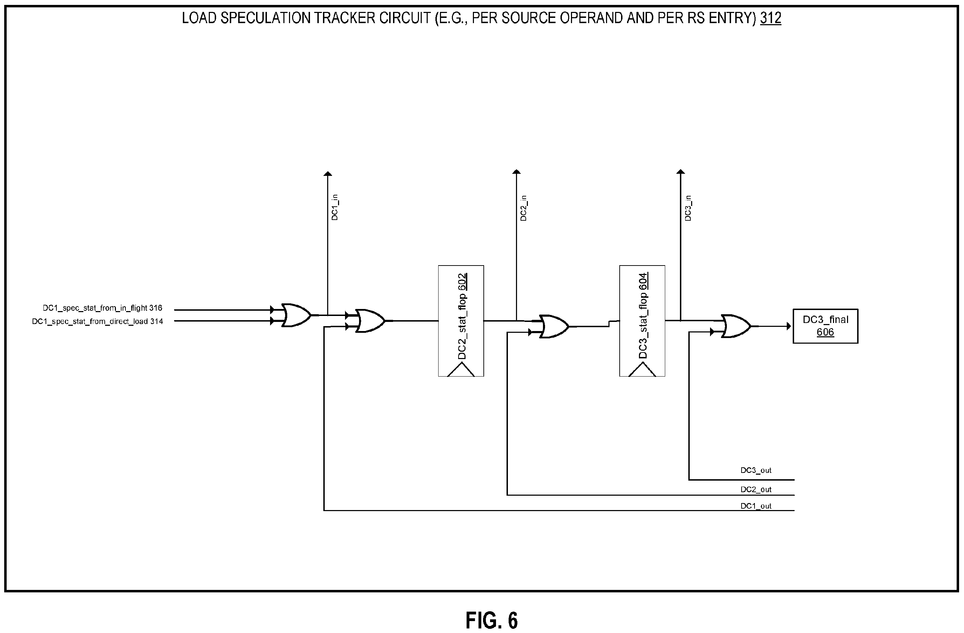

In certain embodiments, load speculation tracker circuit 312 is included to track speculation of a load micro-operation in a data cache, e.g., as discussed in reference to Figure 6 below. Load speculation tracker circuit 312 may receive its progress for micro-operations directly depending on a load from monitoring circuity 212 in Figure 2, via execution wakeup 308 (e.g., including execution wakeup 308 from other execution reservation station 310 - e.g., other integer ALU, floating point or load type of reservation station) and sticky ready logic 324. Load speculation tracker circuit 312 may receive its progress indication for a micro-operation indirectly depending on a load from monitoring circuit 212, via execution wakeup 308 (e.g., including 308 from other execution reservation station 310 - e.g., other integer ALU, floating point or a load type of reservation station) and load speculation logic circuit for in-flight execution uops 318.

In certain embodiments, primary picker circuit 320 picks a first micro-operation (for example, and sends as a vector 328 that includes the information related to that micro-operation, e.g., opcode, source data location(s), destination data location(s), etc.) from unified dependence matrix that is ready for execution for dispatch to an execution circuit and/or secondary picker circuit 322 picks a second micro-operation (for example, and sends as a vector 330 that includes the information related to that micro-operation, e.g., opcode, source data location(s), destination data location(s), etc.) from unified dependence matrix (e.g., via sticky ready logic circuit) that is ready for execution for dispatch to an execution circuit. Such selection may cause an indication of the dispatch to be sent by broadcast vector for wakeup 326, e.g., which is then sent to execution wakeup matrix logic 308 and/or load speculation logic circuit 318. In certain embodiments, such selection causes those micro-operations (e.g., vectors 328 and 330) to be sent by micro-operations picking switch 332 to execution circuits, e.g., input port(s) thereof.

In certain embodiments, reservation station circuit 142 is to indicate a dependent micro-operation as ready for execution speculatively when micro-operations' parent producer micro-operation(s) are in-flight to be serviced but may be cancelled due to various reasons. For example, parent producer micro-operation can be a load micro-operation or other micro-operation directly or indirectly dependently on load micro-operation(s). For example, load speculation tracker circuit 312 tracking at least some of the progress of a direct or indirect parent load micro-operation(s) (e.g., one or more cycles prior to and including the cycle where load micro-operation execution status is resolved) and then sending an indication to a dependent micro-operation that has been marked as ready speculatively. In certain embodiments, an indication from load speculation tracker circuit 312 is used to cancel execution of that direct or indirectly dependent micro-operation on load micro-operation(s) if direct or indirect parent load(s) are determined to be bad, e.g., a data cache miss.

**Figure 5** illustrates a unified speculation state propagation and execution wakeup matrix circuit 302 according to embodiments of the disclosure. An example format of reservation station circuit 142 is included in Figure 5 to illustrate how a plurality of entries (e.g., indexed 0 to n-1) (e.g., with one entry for each micro-operation therein being scheduled) are used to dispatch micro-operations when they are ready for execution, e.g., by sending the micro-operation on one or more issue (or dispatch) ports of the reservation station circuit 142 to a corresponding execution circuit of execution circuits 140 in Figure 1. In one embodiment, a reservation station circuit 142 checks if the operand(s) (e.g., shown as source 1, source 2, and source 3 in Figure 5) for a micro-operation (e.g., as indicated in its reservation station entry) are available and if the corresponding execution circuit is available (e.g., free for use), and dispatches the micro-operation for execution in response to the operand(s) being available and the corresponding execution circuit being available. In certain embodiments, a processor utilizes register renaming to abstract a logical register from a physical register, e.g., with those logical register(s) utilized by reservation station (e.g., scheduler) circuit.

In certain embodiments, unified speculation state propagation and execution wakeup matrix circuit 302 is included as part of reservation station circuit 142. In one embodiment, unified speculation state propagation and execution wakeup matrix circuit 302 has a width of n and a height of n, where n is the number of RS entries per execution port cluster (e.g., primary and secondary). In certain embodiments, unified speculation state propagation and execution wakeup matrix circuit 302 includes n x n matrix 502 of circuit elements (e.g., dep_mtx[c][i][n-1:0]) for each reservation station entry i of execution cluster c. In certain embodiments, each row is a dependence vector for a RS entry, for example, where a dependence vector has a "one" at a bit location corresponding to its source producer's RS entry. For example, dep_mtx[c][i][j] is set to "one" if there is a dependence between a parent micro-operation in RS entry j and child micro-operation i in execution port cluster c. In certain embodiments, there are one or more execution port clusters, where the total number of execution port clusters is capital C. For example, where each cluster has its own respective unified speculation state propagation and execution wakeup matrix circuit 302. In one embodiment, there are three execution port clusters (e.g., execution port cluster C = 3), and thus a 3:1 multiplexer is utilized in front of the dependence matrix. In one embodiment, a lowercase c indicates a particular one of the execution port clusters for a given processor, for example c=1 and C=4, indicating an "execution port cluster" number 1 of a processor (e.g., core) with 4 execution port clusters.

In certain embodiments of an execution wakeup usage mode, a parent micro-operation broadcasts its wakeup vector (e.g., a n-bit vector Cluster_bcst[c][n-1:0] from one of the broadcasting cluster c where c is one of the cluster 0 to cluster C-1) to the unified speculation state propagation and execution wakeup matrix circuit 302, and the execution matrix generates a "hit" indication (e.g., Source_rdy[c][i] in Figure 5) for RS entries which are dependent on broadcasting parent micro-operation. For example, where the "hit" indication from all RS entries is a source ready vector to be consumed by a picker circuit, e.g., picker circuit 320 in Figures 3 and 4.

In certain embodiments, a mode is selected that causes a load speculation status vector (e.g., DC1_in, DC2_in, DC3_in) to be broadcast across unified dependence matrix column. In certain embodiments, a load speculation status vector DC1_in[c][n:1-0], DC2_in[c][n:1-0], DC3_in[c][n:1-0] is an n bit vector (e.g., where n is the matrix width), where c is one of the C execution port clusters. In certain embodiments, bit i of load speculation status vector (e.g., DC1_in[c][i], DC2_in[c][i], DC3_in[c][i]) represents load speculation status of RS entry i of execution port cluster c. For example, DC1_in[c][i] represents RS entry i of execution port cluster c has a dependence on load micro-operation at DC1 pipe stage (e.g., therefore 2 cycle away from load speculation resolution in reference to Figure 2) directly or indirectly. Similarly, DC2_in[c][i] represents RS entry i of execution port cluster c has a dependence on load micro-operation at DC2 pipe stage (e.g., therefore a single cycle away from load speculation resolution in reference to Figure 2). In certain embodiments, load dependence status vector DC1_in, DC2_in, DC3_in propagates from parent micro-operation to dependent micro-operation via unified dependence matrix in this usage mode.

In one embodiment, load speculation vector DC1_in, DC2_in, DC3_in (e.g., but not DC0 or DC4) are broadcast across a column of unified dependence matrix. Producer_cluster_id[c][i] is producer identifier (e.g., RS or execution port cluster in which parent producer micro-operation resides) of micro-operation in RS entry i of execution port cluster c.

```
             i=0 to n-1 (row)
               DC1_out[c][i] = 0;
               DC2_out[c][i] = 0;
               DC3_out[c][i] = 0;
                for j=0 to n-1 (column)
                   // column-wise OR per row
                   DC1_out[c][i] |=DC1_in[producer_cluster_id[c]][i][j] & dep_mtx[c][i][j];
                   DC2_out[c][i] |= DC2_in[producer_cluster_id[c]][i][j] & dep_mtx[c][i][j];
                DC3_out[c][i] |=DC3_in[producer_cluster_id[c]][i][j] & dep_mtx[c][i][j];
                end
             end
```

In this embodiment, if there is a dependence between a parent micro-operation in RS entry j of execution port cluster producer_cluster_id[c] and child micro-operation i of execution port cluster c, as indicated by dep_mtx[c][i][j]=1, DC1_in[producer_cluster_id[c]] [j] propagates to DC1_out[c][i]. In this way, load dependence status is propagated from parent to child. Thus in certain embodiments, load speculation status (e.g., DC1_in, DC2_in, DC3_in) propagates from parent to child (e.g., via AND logic gates, multiplexers, and row-wise OR logic gates as depicted in Figure 5) (e.g., an input coming from Load Speculation Tracker Circuit 312) without relying on broadcasting load dependence status from just picked/dispatched parent micro-operation (e.g., via wakeup matrix hit event) to child micro-operation in a single cycle path.

**Figure 6** illustrates load speculation tracker circuit 312 (e.g., one for each source operand and/or reservation station entry) according to embodiments of the disclosure. More particularly, Figure 6 show details of load speculation tracker circuit 312 for one source of a RS entry. In certain embodiments, load speculation tracker circuit 312 tracks a proper subset of multiple pipelined stages of a data cache access (e.g., as shown in Figure 2). For example, with load speculation tracker circuit 312 (e.g., only) tracking the last two stages of load speculation status before speculation is resolved using first data flop 602 (DC2_stat_flop) and a second data flop 604 (DC3_stat_flop). In one embodiment, load speculation logic circuitry for an in-flight micro-operation 318 computes speculation status (e.g., DC1_spec_stat_from_in_flight 316) of in-flight micro-operation dispatched from RS. For example, with a bit corresponding to a RS entry of in-flight micro-operation with DC1 speculation status marked as a one (instead of a zero) in DC1_spec_stat_from_in_flight.

In certain embodiments, this is a relatively slow operation. Therefore, in certain embodiments, a reservation station circuit computes a DC1 version of speculation status (e.g., instead of DC3 version) and stages it twice (in first data flop 602 (DC2_stat_flop) and second data flop (DC3_stat_flop)) before using it for instant cancellation due to a bad load. In certain embodiments, by maintaining local staging flops, the last two stages of load speculation status logic only propagate directly from parent to child via speculation propagation matrix 304. In this way, a cancellation indication 606 (e.g., DC3_final signal) can be generated early for instant cancelling of a micro-operation in RS if a micro-operation (e.g., directly or indirectly) depends on a bad load. In one embodiment, two levels of staging flops 602, 604 are used to extend this timing path to three cycles (e.g., from micro-operation pick to final micro-operation cancellation) to amortize timing pressure from computing DC1 load speculation status (e.g., DC1_spec_stat_from_in_flight 316 indication) of inflight micro-operation which is dispatched from RS (e.g., as depicted in Figure 3). In one embodiment, a three cycle timing path starts from (DC1) load speculation logic circuit 318 to (DC2) Load Speculation Tracker Circuit 312/speculation propagation matrix 304 to (DC3) Load Speculation Tracker Circuit 312/speculation propagation matrix 304 to final cancellation indication generation.

In certain embodiments, any load dependence originates from a micro-operation with an operand directly depending on a load. In order to minimize logic and staging flops for power and area reasons, certain embodiments herein only track the last two stages (e.g., DC2 and DC3) of load speculation status locally rather than all stages starting from very first stage associated with a (e.g., direct) load dependence. Due to this optimization, in certain embodiments, the DC1 speculation status is to be computed because earlier stages of load speculation status are not tracked and not available. In Figure 3, load speculation logic circuit for in-flight execution micro-operations 318 computes DC1 status (e.g., whether that direct or indirect parent load operation has reached pipeline stage DC1, but not resolving the load speculation status yet) of micro-operation just dispatched into execution pipeline (e.g., where the schedule happens one cycle earlier). Thus, in certain embodiments, only DC1 speculation status of a dependent micro-operation dispatched into execution pipeline is required, e.g., it is not necessary to compute DC1 speculation status of all micro-operations in RS. In certain embodiments, a pending micro-operation does not start a dependence chain and propagate speculation status along with it. In certain embodiments, DC1 load speculation status is determined for a dispatched micro-operation by matching to its parent in-flight in a later stage of execution pipeline (for example, of execution circuit, e.g., as in Figure 9A or 9B). For example, embodiments herein match parent in-flight using a wakeup distance, e.g., along with source (physical source (psrc) identifier) and/or destination (physical destination (pdst) identifier) comparison. In certain embodiments, the DC1 status of dispatched micro-operation and micro-operation with directly dependence on load is combined, then broadcast across column of speculation propagation matrix corresponding to RS entry of dispatched micro-operation or RS entry of micro-operation with direct load dependence.

Generally, a direct load dependence may refer to a micro-operation taking as one of its inputs a result of a load operation and/or an indirect load dependence may refer to a micro-operation taking as one of its inputs a result from a non-load micro-operation directly or indirectly depending on a load operation. In one embodiment, an indirect load dependent micro-operation can be inherited for more than one level, for example, where a micro-operation is considered indirectly dependent on load if one of its inputs is a result from a parent non-load micro-operation(s) and grand-parent non-load micro-operation(s) but great-grand parent load micro-operation(s).

In certain embodiments, to start a chain of speculation status propagation, a micro-operation with a source operand depending on a load directly is to propagate its DC1 speculation status (e.g., DC1_spec_stat_from_direct_load 314 indication in Figures 3 and 6) to dependent child micro-operation. In certain embodiments, DC1_spec_stat_from_load 314 indication is derived for a micro-operation with direct load dependence from a wakeup event from load (e.g., and wakeup distance). As shown in Figure 6, DC3_final indication 606 is generated by the depicted inputs (e.g., via OR logic gates). In certain embodiments, logical ORing of DC1_spec_stat_from_direct_load 316 and DC1_stat_from_in_flight 314 generate DC1 speculation status of all micro-operations in RS that are to start to propagate to a child micro-operation. In certain embodiments, via speculation propagation matrix 304, child micro-operations in every RS entry receive DC1 status from parent. In certain embodiments, the resultant DC1 speculation status is captured by DC2_stat_flop 602 (e.g., for a next cycle as a clock cycles forward). In certain embodiments, DC2 speculation status from DC2_stat_flop 602 from all RS entries are broadcasted across corresponding column of speculation propagation matrix 304. In certain embodiments, child micro-operations in every RS entry receive DC2 speculation status from their parents and capture resultant DC2 speculation status into DC3_stat_flop 604. In certain embodiments, DC3 speculation status from DC3_stat_flop 604 from all RS entries are broadcasted across corresponding column of speculation propagation matrix 304. In certain embodiments, child micro-operations in every RS entry receive DC3_out from parent, e.g., where DC3_final is used to reset sticky ready bits and/or instantly cancel micro-operation picked in that cycle before cancelled micro-operation can broadcast and wakeup its child to stop bad dependence chain propagation.

As one example, for a micro-operation depending on a load, when that micro-operation is selected for execution (e.g., and a corresponding broadcast vector for wakeup 326 is generated), load speculation logic circuit for in-flight execution micro-operations 318 computes DC1 status 316 (e.g., whether that load operation has reached pipeline stage DC1, but not resolving the load speculation status yet).

As another example, for a micro-operation directly depending on a load, that micro-operation is woken up when its parent load executes and that micro-operation knows it is being woken up by the load (e.g., the wakeup process/event is from execution wakeup matrix 308 within the unified speculation and execution wakeup matrix circuit 302). In one embodiment, DC1_spec_state_from_direct_load 314 indication is generated from this wakeup event, regardless of wherever woken up micro-operation directly depending on load micro-operation is scheduled/picked and dispatches into execution pipeline or not, e.g., is in contrast to "Load Speculation Logic Circuit For In-Flight Execution Uops 318" where DC1_spec_stat_from_in_flight indication is (e.g., only) generated in response to micro-operations schedule/picked and dispatched for execution (e.g., into an execution pipeline). In certain embodiments, this is used to handle the case when a micro-operation with a direct LOAD dependence (e.g., an ADD directly dependent on a LOAD as one example) is not picked and dispatched immediately or soon enough after it is woken up/ready by parent LOAD, e.g., ADD is not picked/scheduled and dispatched into execution pipeline early enough such that ADD is already "in-flight" in the execution pipeline when ADD's parent LOAD micro-operation is in its DC1 cycle (micro-operation schedule can be delayed by many factors). For example, when starting tracking of speculation status for all micro-operations in RS in load speculation tracker circuit 312 starting from DC2 (e.g., immediately after DC1). In certain embodiments, the "load speculation logic for in-flight micro-operation 318 is only used after a micro-operation (e.g., ADD) is picked (e.g., and in its second reservation station cycle). However, in certain embodiments this is too late to generate speculation status to write into load speculation tracker circuit 312 starting from DC2 for the micro-operation (e.g., ADD micro-operation), in case where ADD is picked/scheduled and dispatched into execution pipeline when ADD's parent LOAD micro-operation is in its DC2 cycle or later. Therefore for micro-operation with "direct" load (e.g., LOAD µοp) dependence, certain embodiments use a separate logic/path for DC1_spec_state_from_direct_load 314 to write into load speculation tracker circuit 312 when micro-operation directly depending on load reaches DC1 (e.g., via sticky ready 324) so that load speculation tracker circuit 312 can start tracking its DC2 status, e.g., even if micro-operation directly depending on the load (e.g., ADD in one example) has not been picked and dispatched yet. In certain embodiments, DC1_spec_state_from_direct_load 314 is used to handle micro-operation directly depending on LOAD which is picked/dispatched too late to use load speculation logic circuit for in-flight micro-operation 318. In certain embodiments, DC1_spec_state_from_direct_load 314 indication is generated from wakeup event of direct load dependent micro-operation, regardless of whether micro-operation directly depending on load micro-operation is scheduled/picked (e.g., and dispatched) into execution pipeline or not.

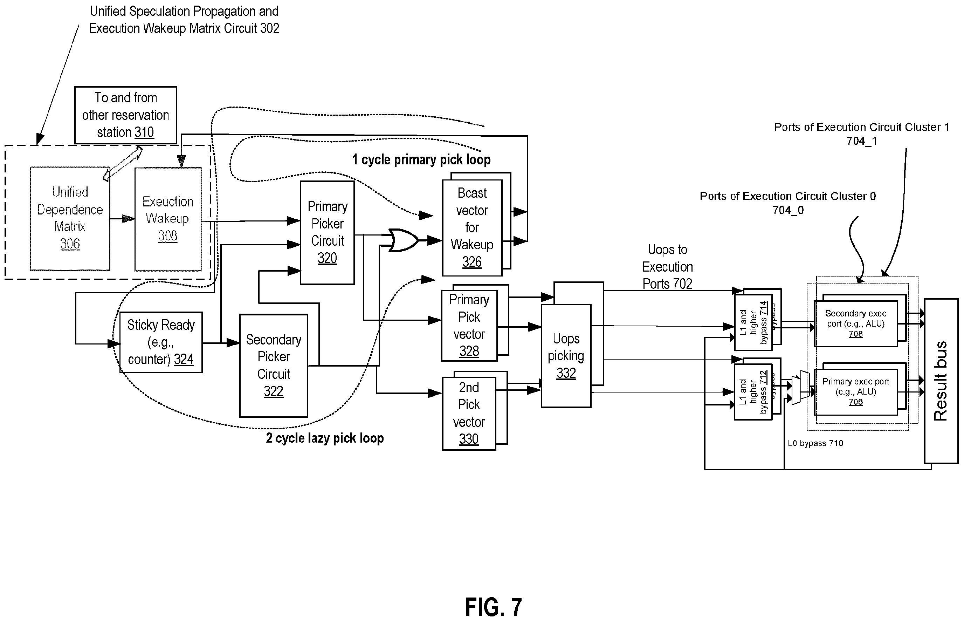

**Figure 7** illustrates reservation station circuitry coupled to a plurality of clusters of execution circuits 704_0 and 704_1 according to embodiments of the disclosure. In one embodiment, primary picker circuit 320 and secondary picker circuit 322 send micro-operations 702 to a plurality of clusters of execution circuits 704_0 and 704_1 for execution.

In certain embodiments, a set of two or more execution circuits (e.g., each having a corresponding port(s)) is clustered into a single cluster. For example, with primary execution port (e.g., of an ALU) 706 and a second execution port (e.g., of an ALU) 708 in a single cluster 704_0. A plurality of clusters may be utilized, e.g., cluster 704_1, etc. In one embodiment, a (e.g., each) cluster includes one or more bypasses for resultant data from an execution circuit (e.g., ALU) directly from another execution circuit (e.g., in the same cluster or an execution circuit from other cluster(s)), e.g., where the result data has not been written back into register file yet (e.g., because of timing). Thus, a child micro-operation may receive one or more of its operand source data from a parent operand via a bypass. In Figure 7, depicted primary port 706 and secondary port 708 in cluster 704_0 have their own L1 and higher bypass 712 and 714, respectively, and only primary port 706 has an L0 bypass 710, e.g., where L0 means the input arrives from parent executing one cycle earlier and L1 means the input arrives from parent executing two cycles earlier. Second cluster 704_1 may include similar components

A reservation station circuit (e.g., scheduler) may include a single picker circuit (e.g., to pick among pre-bound micro-operation candidates assigned to an execution port). A simple pick-2 scheduler implementation may use a static port binding scheme or semi-dynamic port binding scheme as described herein. In certain embodiments, these two schemes do not allow a picker circuit to consider all micro-operations in a reservation station, e.g., the picker circuit only considers a proper subset of micro-operations based on port binding. Since micro-operation port binding and micro-operation pick operations are decoupled, optimal port assignment cannot be achieved, and it results in performance loss in certain embodiments.

Embodiments herein (e.g., in contrast to a static or semi-dynamic parallel pick-2 scheduler), utilize secondary picker circuit 322 which picks one micro-operation per cycle based on ready information from previous cycle. For example, with the second picker using one cycle old ready bits (e.g., "lazy") (e.g., sticky ready 324 (e.g., flops)) to avoid introducing single cycle latency into its wakeup timing path. In certain embodiments, secondary picker circuit 322 only participate in a 2-cycle pick loop path. In one embodiment, primary picker circuit 320 picking a micro-operation from cycle n-1 disqualifies that micro-operation as a candidate in cycle n, the secondary picker circuit 322 in cycle n picks the next oldest ready micro-operation based on the same ready information as from cycle n-1, e.g., where the next oldest ready micro-operation is picked one cycle later than primary pick. In certain embodiments, micro-operation picked by secondary picker circuit 322 is disqualified as candidate for primary picker circuit 320 in the same cycle n. In this way, picking may be done sequentially/serially according to age order using readiness information which is updated once per cycle, e.g., where primary picker circuit 320 in cycle n and secondary picker circuit 322 in cycle n+1 use the same ready information.

In certain embodiments, since secondary picker circuit 322 uses sticky ready 324 (e.g., from previous cycle) instead of live ready from execution wakeup matrix 308, secondary picker circuit 322 starts executing at the beginning of a cycle, e.g., and overlaps with execution wakeup matrix 308 logic in terms of timing. In certain embodiments, execution wakeup matrix 308 output is expected to be slower because of heavy fanout of broadcast signal from dispatched micro-operation after pick/mux process, e.g., such that there is no timing impact due to inclusion of secondary picker circuit 322 since it is completely hidden under primary execution matrix wakeup 308 logic. In one embodiment, the only single cycle loop is the fundamental pick to pick loop from primary picker circuit 320, e.g., where the secondary picker circuit 322 only participates in a two-cycle pick loop. In one embodiment, the cancellation loop is a 3-cycle loop via speculation propagation matrix as shown in Figure 4.

In certain embodiments, all micro-operations (e.g., in contrast to a proper subset of micro-operations as in a static or semi-dynamic port binding scheme) in a reservation station are candidates to dispatch to primary or secondary execution ports within a same execution cluster without restriction, e.g., without use of any static port binding algorithm or on-the-fly adjustment to port binding in a semi-dynamic algorithm. In one embodiment, although the secondary picker circuit 322 uses "lazy ready", the critical micro-operation in a dependency chain is always picked by the primary picker circuit 322 and thus does not exhibit any performance penalty due to sub-optimal port binding to a lazy port, e.g., as in a static or semi-dynamic port binding algorithm. In certain embodiments, use of "lazy ready" not only removes single cycle path from secondary picker circuit 322, execution port of secondary execution circuit (e.g., secondary execution port 708) does not require single cycle (e.g., level 0) bypass from (e.g., all) other execution units. In this way, embodiments herein add a secondary picker circuit 322 and secondary execution circuits (e.g., execution units) to an execution circuit cluster without adding a single cycle timing path therein. These embodiments thus double a number of execution ports and the execution bandwidth without introducing any additional single cycle path over a single picker and execution ports. Embodiments herein provide better performance as available execution bandwidth and drain rate from reservation station is doubled and/or dynamic port binding allows all micro-operations in a reservation station to be picked as candidate by both primary and secondary dispatch ports, e.g., in contrast with a static or semi-dynamic port binding scheme where either dispatch port considers only a proper subset of all micro-operations in a reservation station.

Embodiments herein provide a timing advantage by using such a delayed (e.g., lazy) secondary picker circuit with dynamic port binding. For example, where dynamic port binding allows use of a "lazy ready" scheme for timing without introducing any significant performance penalty due to suboptimal port binding, e.g., in contrast to a general static or semi-dynamic port binding scheme that has difficulty working with lazy scheduler since suboptimal port binding to lazy port adversely affects performance. In certain embodiments, dynamic port binding allows implementation of "lazy pick" without significant performance penalty.

Embodiments herein provide for (e.g., ALU) execution port clustering with level 0 (e.g., single cycle) bypass for the primary execution port only. In one embodiment, an (e.g., ALU) execution cluster consists of a primary ALU and a secondary ALU, e.g., where primary execution circuit (e.g., ALU) supports full data bypass from all primary and secondary execution circuits (e.g., ALUs) and/or secondary execution circuit (e.g., ALU) only supports data bypass from level 1 and higher from primary and secondary execution circuits (e.g., ALUs). As an example, for a producer micro-operation executing at cycle n, Level 0 bypass allows primary execution circuit (e.g., ALU) to consume that result at cycle n+1, and since level 0 data bypass is not available to secondary execution circuit (e.g., ALU), secondary execution circuit (e.g., ALU) may only consume result from producer micro-operation at cycle n+2 or later. Embodiments herein thus avoid adding a single cycle (e.g., level 0) bypass when adding a secondary picker and secondary execution circuit (e.g., ALU) execution port. In certain embodiments, a secondary execution circuit (e.g., ALU) only participates in two cycle timing path, e.g., as depicted in Figure 4. Embodiments herein thus double the number of execution circuits (e.g., ALUs) without introducing any new single cycle timing path, e.g., effectively doubling execution drain rate without timing degradation on first order with a scalable execution circuit (e.g., ALU) clustering scheme.

As an example, a chain of seven micro-operations may include a load (e.g., "first uop") -> A -> B -> second-uop -> C -> D-> third-uop (e.g., where the arrow indicates the following micro-operation is dependent on the prior micro-operation) (e.g., the first, second, and third uops discussed in the examples section below). In certain embodiments, (1) a load (first) uop uses unified speculation and execution wakeup matrix circuit to wake up A, A uop uses unified speculation and execution wakeup matrix circuit to wake up B, B uop uses unified speculation and execution wakeup matrix circuit to wake up the second uop, second uop wakes up C, C wakes up D, D wakes up the third uop (e.g., where all use a unified speculation and execution wakeup matrix circuit to wake up its direct child), (2) A, B, second-uop, C, D, third-uop all reside in the reservation station with unified speculation and execution wakeup matrix circuit, and/or (3) but, the Load (first) uop may reside in another type of reservation station (e.g., a load reservation station), for example, where the Load (first uop) uses unified speculation and execution wakeup matrix circuit to wake up A since A is in the reservation station with unified matrix (e.g., and the same for B, second-uop, C, D, and third-uop). In certain embodiments, Load (first uop) uses a different wakeup mode in the unified speculation and execution wakeup matrix circuit, for example, where the wakeup matrix logic for RS entry A is configurated as a comparator (e.g., an alternate wakeup matrix mode instead of a one-hot dependence vector hit (e.g., as described herein) which may be used for the other uops in this example) so that destination indication (e.g., "PDST tag) from Load (first uop) can be used to wake up A.

Embodiments herein lower the cost and difficulty of increasing the number of reservation station entries, dispatch ports, and execution circuits in a processor. Embodiments herein are directed to a novel reservation station topology, implementing a single unified speculation state propagation and execution wakeup matrix, true age-based dynamic port-binding lazy pick-2 scheduler, and execution circuit (e.g., ALU) execution port clustering. Embodiments herein are a scalable way to increase reservation station depth by removing single cycle timing path from load dependence tracking logic circuitry. Embodiments herein provide a true age-based dynamic port binding scheme that extracts performance by removing inefficiency of a static or semi-dynamics port binding scheme. Embodiments herein provide for dynamic port binding that allows usage of a lazy secondary picker and secondary execution circuit in an execution port cluster to double the number of picker, dispatch, and execution ports without introducing an additional single cycle timing path. An asymmetric execution circuit (e.g., ALU) design can be used efficiently to optimize timing, area, and power. Embodiments herein overcome a static port-binding scheme's difficulties of optimally assigning micro-operations to ALUs with asymmetric functionalities due to lack of dynamic execution information. Embodiments herein provide a lazy pick-2 strategy and load speculation tracking mechanism that is scalable, e.g., and it can be expanded to a higher number of picker circuits (e.g., pick-3, pick-4, etc.) where the since second and higher pick are not in the single cycle timing loop.

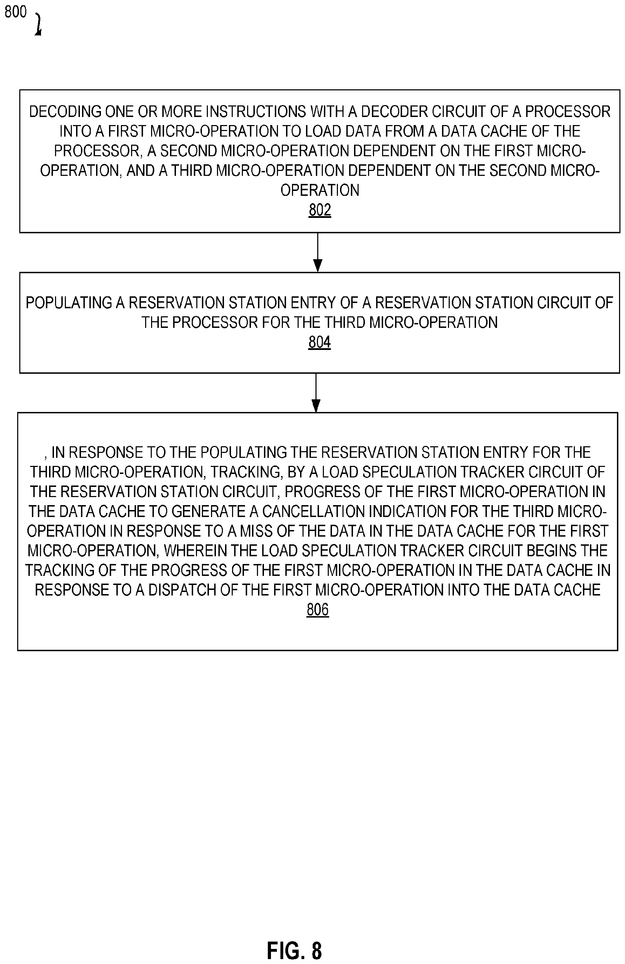

**Figure 8** is a flow diagram illustrating operations 800 for utilizing a reservation station circuit of a processor according to embodiments of the disclosure. Some or all of the operations 800 (or other processes described herein, or variations, and/or combinations thereof) are performed under the control of a reservation station circuit.

The operations 800 include, at block 802, decoding one or more instructions with a decoder circuit of a processor into a first micro-operation to load data from a data cache of the processor, a second micro-operation dependent on the first micro-operation, and a third micro-operation dependent on the second micro-operation. The operations 800 further include, at block 804, populating a reservation station entry of a reservation station circuit of the processor for the third micro-operation. The operations 800 further include, at block 806, in response to the populating the reservation station entry for the third micro-operation, tracking, by a load speculation tracker circuit of the reservation station circuit, progress of the first micro-operation in the data cache to generate a cancellation indication for the third micro-operation in response to a miss of the data in the data cache for the first micro-operation, wherein the load speculation tracker circuit begins the tracking of the progress of the first micro-operation in the data cache in response to a dispatch of the first micro-operation into the data cache.

In another embodiment, operations 800 include decoding one or more instructions with a decoder circuit of a processor into a micro-operation to load data from a data cache of the processor, a micro-operation to operate on data, or a first micro-operation to load data from a data cache and a second micro-operation to operate on the data; populating one or more reservation station entries of a reservation station circuit of the processor for the one or more micro-operation(s); and, in response to the populating the reservation station entries for the direct or indirect load dependent micro-operation, tracking, by a load speculation tracker circuit of the reservation station circuit, progress (with respective to execution status in data cache execution pipeline) of direct or indirect parent load micro-operation of the micro-operation to generate a cancellation indication for the direct or indirect load dependent micro-operation in response to a miss of the data in data cache for the direct or indirect parent load micro-operation, wherein the load speculation tracker circuit begins the tracking of the progress of the direct or indirect parent load micro-operation in the data cache execution pipeline, in response to the direct or indirect parent load micro-operation is dispatched into data cache execution pipeline, utilizing speculation matrix propagation circuit.

Exemplary architectures, systems, etc. that the above may be used in are detailed below.

At least some embodiments of the disclosed technologies can be described in view of the following examples:
Example 1. An apparatus comprising:
   a decoder circuit to decode one or more instructions into a micro-operation to load data from a data cache, a micro-operation to operate on data, or a first micro-operation to load from a data cache and a second micro-operation to operate on the data;
   an execution circuit to execute micro-operation; and
   a reservation station circuit comprising a load speculation tracker circuit and coupled between the decoder circuit and the execution circuit, the load speculation tracker circuit to, for a reservation station entry of a micro-operation, track progress of direct or indirect parent load micro-operation (e.g., with respective to execution status in data cache execution pipeline) of the micro-operation to generate a cancellation indication (to the direct or indirect load dependent micro-operation in the reservation station entry) in response to a miss of the data in the data cache for the direct or indirect parent load micro-operation, wherein the load speculation tracker circuit begins the tracking of the progress of the direct or indirect parent load micro-operation in the data cache execution pipeline, in response to the direct or indirect parent load micro-operation is dispatched into data cache execution pipeline, utilizing speculation propagation matrix circuit.
Example 2. The apparatus of example 1, wherein the data cache comprises a plurality of pipelined stages, and the load speculation tracker circuit is to only track progress of the direct or indirect parent load micro-operation in a proper subset of the plurality of pipelined stages that includes a pipeline stage that determines if there is the miss of the data in data cache.
Example 3. The apparatus of example 1, wherein the data cache comprises a plurality of pipelined stages, and the load speculation tracker circuit is to only track progress of the micro-operation in a second pipeline stage, of the plurality of pipelined stages, that determines if there is the miss of the data in data cache and a first pipeline stage immediately prior to the second pipeline stage.
Example 4. The apparatus of example 1, wherein the cancellation indication is to cancel the direct or indirect load dependent micro-operation, either picked for execution or not yet picked for execution, before it wakes up a dependent micro-operation .
Example 5. The apparatus of example 1, wherein the reservation station circuit comprises a unified speculation status propagation and execution matrix circuit, including the reservation station entry, to send a status indication of the progress (inheriting from direct or indirect parent load micro-operation) of a producer micro-operation to the reservation station entries for dependent micro-operation(s), and send a wakeup indication to the reservation station entries for dependent micro-operation(s) when one or more producer micro-operations are ready, scheduled and picked/dispatched for execution in execution pipelines.
Example 6. The apparatus of example 1, wherein the reservation station circuit comprises a first picker circuit to send for execution a micro-operation that receives its ready for execution indication in a current cycle and a second picker circuit to send for execution a micro-operation that received its ready for execution indication in a previous cycle.
Example 7. The apparatus of example 6, wherein the reservation station circuit further comprises a Sticky Ready counter to count a number of cycles that operand(s) of each of a plurality of micro-operations that become ready. Direct load dependent micro-operation(s) in reservation station entries utilize Sticky Ready counter, along with wakeup event from execution matrix circuit, to generate status indication of the progress of its parent load micro-operation.
Example 8. The apparatus of example 6, further comprising a second execution circuit, wherein the execution circuit comprises a single cycle resultant bypass input, the second execution circuit does not comprise a single cycle resultant bypass input, and the first picker circuit is to send micro-operations for execution on the execution circuit but not the second execution circuit and the second picker circuit is to send micro-operations for execution on the second execution circuit but not the execution circuit.
Example 9. A method comprising:
   decoding one or more instructions with a decoder circuit of a processor into a micro-operation to load data from a data cache of the processor, a micro-operation to operate on data, or a first micro-operation to load from a data cache and a second micro-operation to operate on the data;
   populating a reservation station entry of a reservation station circuit of the processor for micro-operation(s); and
   in response to the populating the reservation station entry for micro-operation, tracking, by a load speculation tracker circuit of the reservation station circuit, progress of the direct or indirect parent load (e.g., progress with respective to execution status in data cache execution pipeline) of the micro-operation to generate a cancellation indication (to the direct or indirect load dependent micro-operation in the reservation entry) in response to a miss of the data in the data cache for the direct or indirect parent load micro-operation, wherein the load speculation tracker circuit begins the tracking of the progress of the direct or indirect parent load micro-operation in the data cache execution pipeline, in response to the direct or indirect parent load micro-operation is dispatched into data cache execution pipeline, utilizing speculation propagation circuit..
Example 10. The method of example 9, wherein the data cache comprises a plurality of pipelined stages, and further comprising only tracking the progress of the direct or indirect parent load micro-operation by the load speculation tracker circuit in a proper subset of the plurality of pipelined stages that includes a pipeline stage that determines if there is the miss of the data in data cache.
Example 11. The method of example 9, wherein the data cache comprises a plurality of pipelined stages, and further comprising only tracking the progress of the micro-operation by the load speculation tracker circuit in a second pipeline stage, of the plurality of pipelined stages, that determines if there is the miss of the data in data cache and a first pipeline stage immediately prior to the second pipeline stage.
Example 12. The method of example 9, wherein the cancellation indication cancels direct or indirect load dependent micro-operation, either picked for execution or not yet picked for execution, before it wakes up a dependent micro-operation.
Example 13. The method of example 9, wherein the reservation station circuit comprises a unified speculation status propagation and execution matrix circuit, including the reservation station entry, and further comprising sending, by the unified speculation status propagation and execution matrix circuit, a status indication of the progress (inheriting from direct or indirect parent load micro-operation) of a producer micro-operation to the reservation station entries for dependent micro-operation(s), and send a wakeup indication to the reservation station entries for dependent micro-operation(s) when one or more producer micro-operations are ready, scheduled and picked/dispatched for execution in execution pipelines.
Example 14. The method of example 9, further comprising:
   sending for execution, by a first picker circuit of the reservation station circuit, a micro-operation that receives its ready for execution indication in a current cycle; and
   sending for execution, by a second picker circuit of the reservation station circuit, a micro-operation that received its ready for execution indication in a previous cycle.
Example 15. The method of example 14, further comprising counting, by a Sticky Ready counter of the reservation station circuit, a number of cycles that operand(s) of each of a plurality of micro-operations that become ready. Direct load dependent micro-operation(s) in reservation station entries utilize Sticky Ready counter, along with wakeup event from execution matrix circuit, to generate status indication of the progress of its parent load micro-operation.
Example 16. The method of example 14, wherein the sending for execution, by the first picker circuit, is to an execution circuit of the processor comprising a single cycle resultant bypass input, and the sending for execution, by the second picker circuit, is to a second execution circuit of the processor that does not comprise a single cycle resultant bypass input.
Example 17. An apparatus comprising:
   a memory; and
   a processor comprising:
      a data cache coupled to the memory,
      a decoder circuit to decode one or more instructions into a micro-operation to load data from the data cache, a micro-operation to operate on data, or a first micro-operation to load from a data cache and a second micro-operation to operate on the data,
      an execution circuit to execute micro-operations, and
      a reservation station circuit comprising a load speculation tracker circuit and coupled between the decoder circuit and the execution circuit, the load speculation tracker circuit to, for a reservation station entry of the micro-operation, track progress of the direct or indirect parent load (e.g., progress with respective to execution status in data cache execution pipeline) of the micro-operation to generate a cancellation indication (to the direct or indirect load dependent micro-operation in the reservation entry)in response to a miss of the data in the data cache for the direct or indirect parent load micro-operation, wherein the load speculation tracker circuit is to begin to track the progress of the direct or indirect parent load micro-operation in the data cache execution pipeline, in response to the direct or indirect parent load micro-operation is dispatched into data cache execution pipeline, utilizing speculation propagation circuit.
Example 18. The apparatus of example 17, wherein the data cache comprises a plurality of pipelined stages, and the load speculation tracker circuit is to only track progress of the direct and indirect parent micro-operation in a proper subset of the plurality of pipelined stages that includes a pipeline stage that determines if there is the miss of the data in data cache.
Example 19. The apparatus of example 17, wherein the data cache comprises a plurality of pipelined stages, and the load speculation tracker circuit is to only track progress of the micro-operation in a second pipeline stage, of the plurality of pipelined stages, that determines if there is the miss of the data in data cache and a first pipeline stage immediately prior to the second pipeline stage.
Example 20. The apparatus of example 17, wherein the cancellation indication is to cancel direct or indirect load dependent micro-operation, picked for execution or not yet picked for execution, before it wakes up a dependent micro-operation.
Example 21. The apparatus of example 17, wherein the reservation station circuit comprises a unified speculation status propagation and execution matrix circuit, including the reservation station entry, to send a status indication of the progress (inheriting from direct or indirect parent load micro-operation) of a producer micro-operation to the reservation station entries for dependent micro-operation(s), and send a wakeup indication to the reservation station entries for dependent micro-operation(s) when one or more producer micro-operations are ready, scheduled and picked/dispatched for execution in execution pipelines.
Example 22. The apparatus of example 17, wherein the reservation station circuit comprises a first picker circuit to send for execution a micro-operation that receives its ready for execution indication in a current cycle and a second picker circuit to send for execution a micro-operation that received its ready for execution indication in a previous cycle.
Example 23. The apparatus of example 22, wherein the reservation station circuit further comprises a Sticky ready counter to count a number of cycles that operand(s) of each of a plurality of micro-operations that become ready. For example, where a direct load dependent micro-operation(s) in reservation station entries utilize Sticky Ready counter, along with wakeup event from execution matrix circuit, to generate status indication of the progress of its parent load micro-operation.
Example 24. The apparatus of example 22, further comprising a second execution circuit, wherein the execution circuit comprises a single cycle resultant bypass input, the second execution circuit does not comprise a single cycle resultant bypass input, and the first picker circuit is to send micro-operations for execution on the execution circuit but not the second execution circuit and the second picker circuit is to send micro-operations for execution on the second execution circuit but not the execution circuit.
Example 25. An apparatus comprising:
   a decoder circuit to decode one or more instructions into a first micro-operation to load data from a data cache, a second micro-operation dependent on the first micro-operation, and a third micro-operation dependent on the second micro-operation;
   an execution circuit to execute the first micro-operation, the second micro-operation, and the third micro-operation; and
   a reservation station circuit comprising a load speculation tracker circuit and coupled between the decoder circuit and the execution circuit, the load speculation tracker circuit to, for a reservation station entry of the third micro-operation, track progress of the first micro-operation in the data cache to generate a cancellation indication for the third micro-operation in response to a miss of the data in the data cache for the first micro-operation, wherein the load speculation tracker circuit is to begin to track the progress of the first micro-operation in the data cache in response to a dispatch of the first micro-operation into the data cache.

In one embodiment, the second micro-operation is optional, e.g., where the third micro-operation directly depends on the first micro-operation.
Example 26. The apparatus of example 25, wherein the data cache comprises a plurality of pipelined stages, and the load speculation tracker circuit is to only track progress of the first micro-operation in a proper subset of the plurality of pipelined stages that includes a pipeline stage that determines if there is the miss of the data in the data cache.
Example 27. The apparatus of example 25, wherein the data cache comprises a plurality of pipelined stages, and the load speculation tracker circuit is to only track progress of the first micro-operation in a second pipeline stage, of the plurality of pipelined stages, that determines if there is the miss of the data in the data cache and a first pipeline stage immediately prior to the second pipeline stage.
Example 28. The apparatus of example 25, wherein the cancellation indication is to cancel the third micro-operation before it wakes up a dependent micro-operation.
Example 29. The apparatus of example 25, wherein the reservation station circuit comprises a unified speculation status propagation and execution matrix circuit, including the reservation station entry, to send a status indication of the progress of the first micro-operation in the data cache to the reservation station entry for the third micro-operation, and send a wakeup indication to a reservation station entry for a micro-operation when one or more producer micro-operations of that micro-operation are dispatched for execution.
Example 30. The apparatus of example 25, wherein the reservation station circuit comprises a first picker circuit to send for execution a micro-operation that receives its ready for execution indication in a current cycle and a second picker circuit to send for execution a micro-operation that received its ready for execution indication in a previous cycle.
Example 31. The apparatus of example 30, wherein the reservation station circuit further comprises a counter to count a number of cycles that one or more operands of each of a plurality of micro-operations are ready for execution.
Example 32. The apparatus of example 30, further comprising a second execution circuit, wherein the execution circuit comprises a single cycle resultant bypass input, the second execution circuit does not comprise a single cycle resultant bypass input, and the first picker circuit is to send micro-operations for execution on the execution circuit and the second picker circuit is to send micro-operations for execution on the second execution circuit but not the execution circuit.
Example 33. A method comprising:
   decoding one or more instructions with a decoder circuit of a processor into a first micro-operation to load data from a data cache of the processor, a second micro-operation dependent on the first micro-operation, and a third micro-operation dependent on the second micro-operation;
   populating a reservation station entry of a reservation station circuit of the processor for the third micro-operation; and
   in response to the populating the reservation station entry for the third micro-operation, tracking, by a load speculation tracker circuit of the reservation station circuit, progress of the first micro-operation in the data cache to generate a cancellation indication for the third micro-operation in response to a miss of the data in the data cache for the first micro-operation, wherein the load speculation tracker circuit begins the tracking of the progress of the first micro-operation in the data cache in response to a dispatch of the first micro-operation into the data cache.
Example 34. The method of example 33, wherein the data cache comprises a plurality of pipelined stages, and further comprising only tracking the progress of the first micro-operation by the load speculation tracker circuit in a proper subset of the plurality of pipelined stages that includes a pipeline stage that determines if there is the miss of the data in the data cache.
Example 35. The method of example 33, wherein the data cache comprises a plurality of pipelined stages, and further comprising only tracking the progress of the first micro-operation by the load speculation tracker circuit in a second pipeline stage, of the plurality of pipelined stages, that determines if there is the miss of the data in the data cache and a first pipeline stage immediately prior to the second pipeline stage.
Example 36. The method of example 33, wherein the cancellation indication cancels the third micro-operation picked for execution before it wakes up a dependent micro-operation.
Example 37. The method of example 33, wherein the reservation station circuit comprises a unified speculation status propagation and execution matrix circuit, including the reservation station entry, and further comprising sending, by the unified speculation status propagation and execution matrix circuit, a status indication of the progress of the first micro-operation in the data cache to the reservation station entry for the third micro-operation, and sending a wakeup indication to a reservation station entry for a micro-operation when one or more producer micro-operations of that micro-operation are dispatched for execution.
Example 38. The method of example 33, further comprising:
   sending for execution, by a first picker circuit of the reservation station circuit, a micro-operation that receives its ready for execution indication in a current cycle; and
   sending for execution, by a second picker circuit of the reservation station circuit, a micro-operation that received its ready for execution indication in a previous cycle.
Example 39. The method of example 38, further comprising counting, by a counter of the reservation station circuit, a number of cycles that one or more operands of each of a plurality of micro-operations are ready for execution but not yet sent for execution have been pending, wherein the sending for execution, by the second picker circuit, comprises selecting a micro-operation having a highest number of cycles.
Example 40. The method of example 38, wherein the sending for execution, by the first picker circuit, is to an execution circuit of the processor comprising a single cycle resultant bypass input, and the sending for execution, by the second picker circuit, is to a second execution circuit of the processor that does not comprise a single cycle resultant bypass input.
Example 41. An apparatus comprising:
   a memory; and
   a processor comprising:
      a data cache coupled to the memory,
      a decoder circuit to decode one or more instructions into a first micro-operation to load data from the data cache, a second micro-operation dependent on the first micro-operation, and a third micro-operation dependent on the second micro-operation,
      an execution circuit to execute the first micro-operation, the second micro-operation, and the third micro-operation, and
      a reservation station circuit comprising a load speculation tracker circuit and coupled between the decoder circuit and the execution circuit, the load speculation tracker circuit to, for a reservation station entry of the third micro-operation, track progress of the first micro-operation in the data cache to generate a cancellation indication for the third micro-operation in response to a miss of the data in the data cache for the first micro-operation, wherein the load speculation tracker circuit is to begin to track the progress of the first micro-operation in the data cache in response to a dispatch of the first micro-operation into the data cache.
Example 42. The apparatus of example 41, wherein the data cache comprises a plurality of pipelined stages, and the load speculation tracker circuit is to only track progress of the first micro-operation in a proper subset of the plurality of pipelined stages that includes a pipeline stage that determines if there is the miss of the data in the data cache.
Example 43. The apparatus of example 41, wherein the data cache comprises a plurality of pipelined stages, and the load speculation tracker circuit is to only track progress of the first micro-operation in a second pipeline stage, of the plurality of pipelined stages, that determines if there is the miss of the data in the data cache and a first pipeline stage immediately prior to the second pipeline stage.
Example 44. The apparatus of example 41, wherein the cancellation indication is to cancel the third micro-operation picked for execution before it wakes up a dependent micro-operation.
Example 45. The apparatus of example 41, wherein the reservation station circuit comprises a unified speculation status propagation and execution matrix circuit, including the reservation station entry, to send a status indication of the progress of the first micro-operation in the data cache to the reservation station entry for the third micro-operation, and send a wakeup indication to a reservation station entry for a micro-operation when one or more producer micro-operations of that micro-operation are dispatched for execution.
Example 46. The apparatus of example 41, wherein the reservation station circuit comprises a first picker circuit to send for execution a micro-operation that receives its ready for execution indication in a current cycle and a second picker circuit to send for execution a micro-operation that received its ready for execution indication in a previous cycle.
Example 47. The apparatus of example 46, wherein the reservation station circuit further comprises a counter to count a number of cycles that one or more operands of each of a plurality of micro-operations are ready for execution.
Example 48. The apparatus of example 46, further comprising a second execution circuit, wherein the execution circuit comprises a single cycle resultant bypass input, the second execution circuit does not comprise a single cycle resultant bypass input, and the first picker circuit is to send micro-operations for execution on the execution circuit and the second picker circuit is to send micro-operations for execution on the second execution circuit but not the execution circuit.
Example 49. The apparatus of example 25 or example 41 (or the method of example 33), wherein the second micro-operation indirectly depends on the first micro-operation via a chained dependency on a micro-operation that directly depends on the first micro-operation.

In yet another embodiment, an apparatus comprises a data storage device that stores code that when executed by a hardware processor causes the hardware processor to perform any method disclosed herein. An apparatus may be as described in the detailed description. A method may be as described in the detailed description.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel^{®} 64 and IA-32 Architectures Software Developer's Manual, November 2018; and see Intel^{®} Architecture Instruction Set Extensions Programming Reference, October 2018).

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary graphics processors are described next. Followed by exemplary core architectures, and descriptions of exemplary processors and computer architectures.

### Exemplary Core Architectures

### In-order and out-of-order core block diagram

**Figure 9A** is a block diagram illustrating both an exemplary in-order pipeline and an exemplary register renaming, out-of-order issue/execution pipeline according to embodiments of the disclosure. Figure 9B is a block diagram illustrating both an exemplary embodiment of an in-order architecture core and an exemplary register renaming, out-of-order issue/execution architecture core to be included in a processor according to embodiments of the disclosure. The solid lined boxes in **Figures 9A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 9A****,** a processor pipeline 900 includes a fetch stage 902, a length decode stage 904, a decode stage 906, an allocation stage 908, a renaming stage 910, a scheduling (also known as a dispatch or issue) stage 912, a register read/memory read stage 914, an execute stage 916, a write back/memory write stage 918, an exception handling stage 922, and a commit stage 924.

**Figure 9B** shows processor core 990 including a front end unit 930 coupled to an execution engine unit 950, and both are coupled to a memory unit 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front end unit 930 includes a branch prediction unit 932 coupled to an instruction cache unit 934, which is coupled to an instruction translation lookaside buffer (TLB) 936, which is coupled to an instruction fetch unit 938, which is coupled to a decode unit 940. The decode unit 940 (or decoder or decoder unit) may decode instructions (e.g., macro-instructions), and generate as an output one or more micro-operations, micro-code entry points, micro-instructions, other instructions, or other control signals, which are decoded from, or which otherwise reflect, or are derived from, the original instructions. The decode unit 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM or other medium that stores microcode for certain macro-instructions (e.g., in decode unit 940 or otherwise within the front end unit 930). The decode unit 940 is coupled to a rename/allocator unit 952 in the execution engine unit 950.

The execution engine unit 950 includes the rename/allocator unit 952 coupled to a retirement unit 954 and a set of one or more scheduler unit(s) 956. The scheduler unit(s) 956 represents any number of different schedulers, including reservations stations, central instruction window, etc. The scheduler unit(s) 956 is coupled to the physical register file(s) unit(s) 958. Each of the physical register file(s) units 958 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 958 comprises a vector registers unit, a write mask registers unit, and a scalar registers unit. These register units may provide architectural vector registers, vector mask registers, and general purpose registers. The physical register file(s) unit(s) 958 is overlapped by the retirement unit 954 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 954 and the physical register file(s) unit(s) 958 are coupled to the execution cluster(s) 960. The execution cluster(s) 960 includes a set of one or more execution units 962 and a set of one or more memory access units 964. The execution units 962 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 956, physical register file(s) unit(s) 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 964). It should also be understood that where separate pipelines are used, one or more of these pipelines may be out-of-order issue/execution and the rest in-order.

The set of memory access units 964 is coupled to the memory unit 970, which includes a data TLB unit 972 coupled to a data cache unit 974 coupled to a level 2 (L2) cache unit 976. In one exemplary embodiment, the memory access units 964 may include a load unit, a store address unit, and a store data unit, each of which is coupled to the data TLB unit 972 in the memory unit 970. The instruction cache unit 934 is further coupled to a level 2 (L2) cache unit 976 in the memory unit 970. The L2 cache unit 976 is coupled to one or more other levels of cache and eventually to a main memory.

By way of example, the exemplary register renaming, out-of-order issue/execution core architecture may implement the pipeline 900 as follows: 1) the instruction fetch 938 performs the fetch and length decoding stages 902 and 904; 2) the decode unit 940 performs the decode stage 906; 3) the rename/allocator unit 952 performs the allocation stage 908 and renaming stage 910; 4) the scheduler unit(s) 956 performs the schedule stage 912; 5) the physical register file(s) unit(s) 958 and the memory unit 970 perform the register read/memory read stage 914; the execution cluster 960 perform the execute stage 916; 6) the memory unit 970 and the physical register file(s) unit(s) 958 perform the write back/memory write stage 918; 7) various units may be involved in the exception handling stage 922; and 8) the retirement unit 954 and the physical register file(s) unit(s) 958 perform the commit stage 924.

The core 990 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 990 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyper-Threading technology).

While register renaming is described in the context of out-of-order execution, it should be understood that register renaming may be used in an in-order architecture. While the illustrated embodiment of the processor also includes separate instruction and data cache units 934/974 and a shared L2 cache unit 976, alternative embodiments may have a single internal cache for both instructions and data, such as, for example, a Level 1 (LI) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

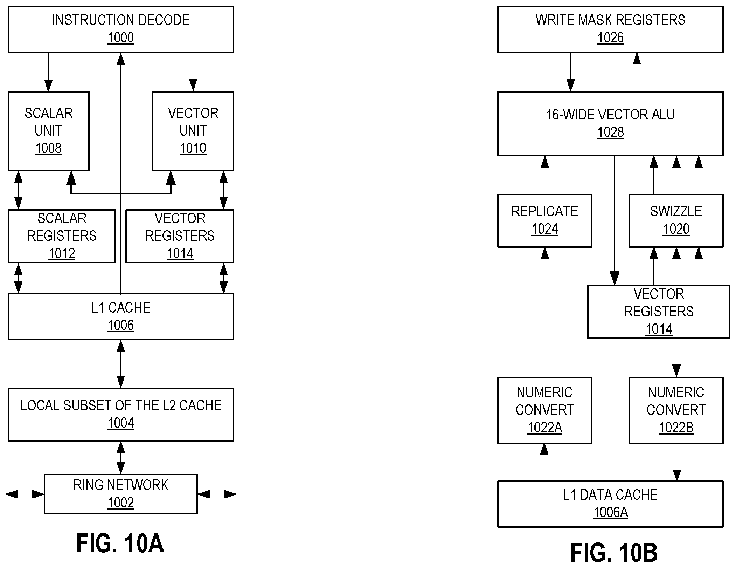

**Figures 10A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 10A** is a block diagram of a single processor core, along with its connection to the on-die interconnect network 1002 and with its local subset of the Level 2 (L2) cache 1004, according to embodiments of the disclosure. In one embodiment, an instruction decode unit 1000 supports the x86 instruction set with a packed data instruction set extension. An L1 cache 1006 allows low-latency accesses to cache memory into the scalar and vector units. While in one embodiment (to simplify the design), a scalar unit 1008 and a vector unit 1010 use separate register sets (respectively, scalar registers 1012 and vector registers 1014) and data transferred between them is written to memory and then read back in from a level 1 (L1) cache 1006, alternative embodiments of the disclosure may use a different approach (e.g., use a single register set or include a communication path that allow data to be transferred between the two register files without being written and read back).

The local subset of the L2 cache 1004 is part of a global L2 cache that is divided into separate local subsets, one per processor core. Each processor core has a direct access path to its own local subset of the L2 cache 1004. Data read by a processor core is stored in its L2 cache subset 1004 and can be accessed quickly, in parallel with other processor cores accessing their own local L2 cache subsets. Data written by a processor core is stored in its own L2 cache subset 1004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 10B** is an expanded view of part of the processor core in **Figure 10A** according to embodiments of the disclosure. **Figure 10B** includes an L1 data cache 1006A part of the L1 cache 1004, as well as more detail regarding the vector unit 1010 and the vector registers 1014. Specifically, the vector unit 1010 is a 16-wide vector processing unit (VPU) (see the 16-wide ALU 1028), which executes one or more of integer, single-precision float, and double-precision float instructions. The VPU supports swizzling the register inputs with swizzle unit 1020, numeric conversion with numeric convert units 1022A-B, and replication with replication unit 1024 on the memory input. Write mask registers 1026 allow predicating resulting vector writes.

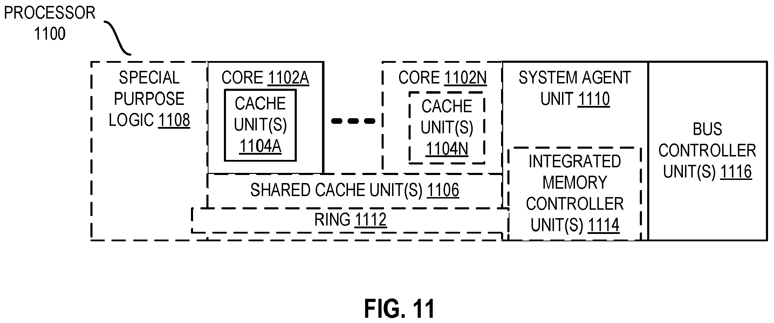

**Figure 11** is a block diagram of a processor 1100 that may have more than one core, may have an integrated memory controller, and may have integrated graphics according to embodiments of the disclosure. The solid lined boxes in **Figure 11** illustrate a processor 1100 with a single core 1102A, a system agent 1110, a set of one or more bus controller units 1116, while the optional addition of the dashed lined boxes illustrates an alternative processor 1100 with multiple cores 1102A-N, a set of one or more integrated memory controller unit(s) 1114 in the system agent unit 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1106, and external memory (not shown) coupled to the set of integrated memory controller units 1114. The set of shared cache units 1106 may include one or more mid-level caches, such as level 2 (L2), level 3 (L3), level 4 (L4), or other levels of cache, a last level cache (LLC), and/or combinations thereof. While in one embodiment a ring based interconnect unit 1112 interconnects the integrated graphics logic 1108, the set of shared cache units 1106, and the system agent unit 1110/integrated memory controller unit(s) 1114, alternative embodiments may use any number of well-known techniques for interconnecting such units. In one embodiment, coherency is maintained between one or more cache units 1106 and cores 1102-A-N.

In some embodiments, one or more of the cores 1102A-N are capable of multithreading. The system agent 1110 includes those components coordinating and operating cores 1102A-N. The system agent unit 1110 may include for example a power control unit (PCU) and a display unit. The PCU may be or include logic and components needed for regulating the power state of the cores 1102A-N and the integrated graphics logic 1108. The display unit is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set.

### Exemplary Computer Architectures

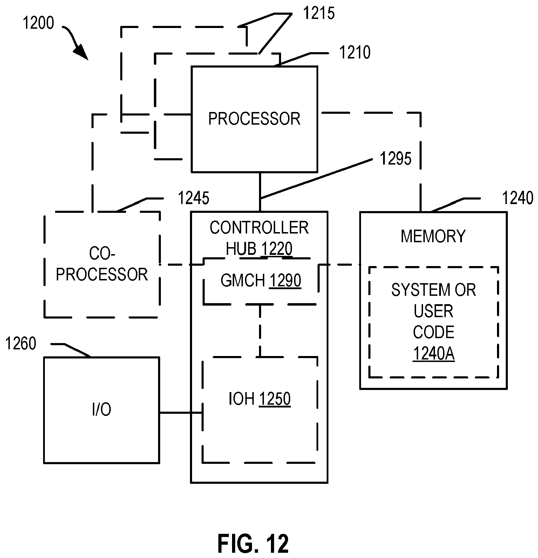

**Figures 12-15** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 12****,** shown is a block diagram of a system 1200 in accordance with one embodiment of the present disclosure. The system 1200 may include one or more processors 1210, 1215, which are coupled to a controller hub 1220. In one embodiment the controller hub 1220 includes a graphics memory controller hub (GMCH) 1290 and an Input/Output Hub (IOH) 1250 (which may be on separate chips); the GMCH 1290 includes memory and graphics controllers to which are coupled memory 1240 and a coprocessor 1245; the IOH 1250 is couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250. Memory 1240 may include system or user code 1240A, for example, that when executed causes a processor to perform any method of this disclosure.

The optional nature of additional processors 1215 is denoted in **Figure 12** with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as Quickpath Interconnect (QPI), or similar connection 1295.

In one embodiment, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

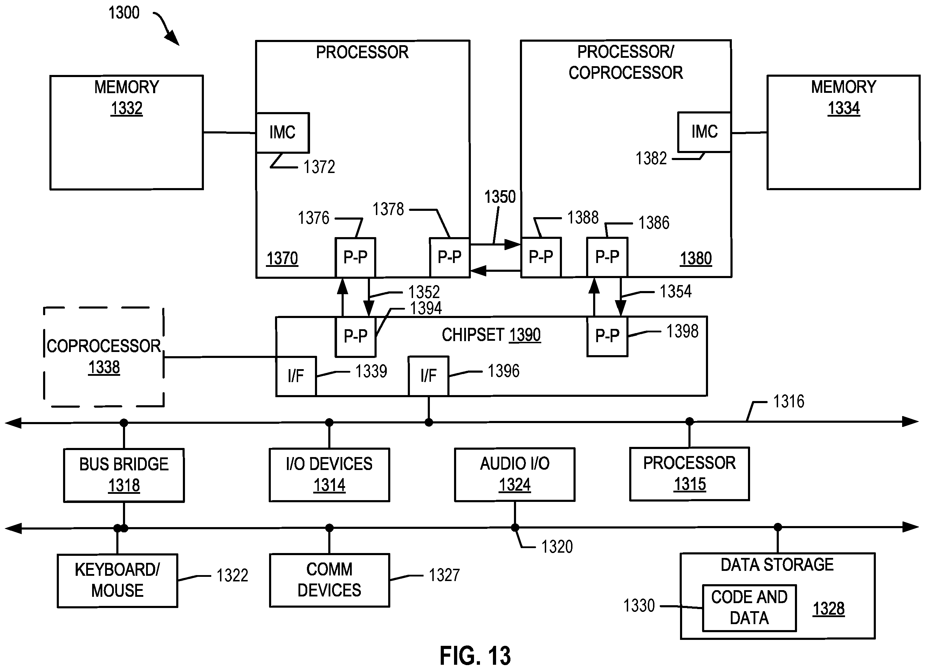

Referring now to **Figure 13****,** shown is a block diagram of a first more specific exemplary system 1300 in accordance with an embodiment of the present disclosure. As shown in **Figure 13****,** multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the disclosure, processors 1370 and 1380 are respectively processors 1210 and 1215, while coprocessor 1338 is coprocessor 1245. In another embodiment, processors 1370 and 1380 are respectively processor 1210 coprocessor 1245.

Processors 1370 and 1380 are shown including integrated memory controller (IMC) units 1372 and 1382, respectively. Processor 1370 also includes as part of its bus controller units point-to-point (P-P) interfaces 1376 and 1378; similarly, second processor 1380 includes P-P interfaces 1386 and 1388. Processors 1370, 1380 may exchange information via a point-to-point (P-P) interface 1350 using P-P interface circuits 1378, 1388. As shown in **Figure 13****,** IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1339. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present disclosure is not so limited.

As shown in **Figure 13****,** various I/O devices 1314 may be coupled to first bus 1316, along with a bus bridge 1318 which couples first bus 1316 to a second bus 1320. In one embodiment, one or more additional processor(s) 1315, such as coprocessors, high-throughput MIC processors, GPGPU's, accelerators (such as, e.g., graphics accelerators or digital signal processing (DSP) units), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of **Figure 13****,** a system may implement a multi-drop bus or other such architecture.

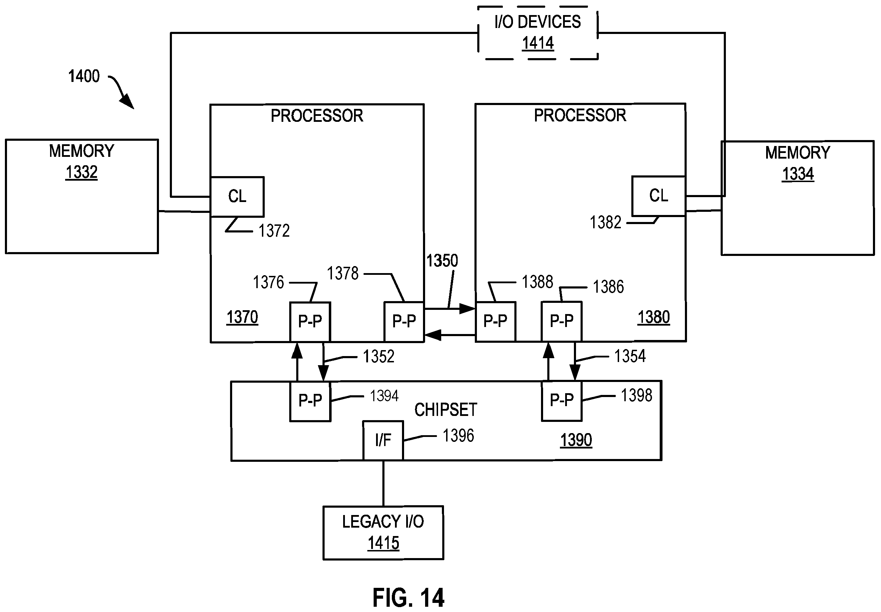

Referring now to **Figure 14****,** shown is a block diagram of a second more specific exemplary system 1400 in accordance with an embodiment of the present disclosure. Like elements in **Figures 13** **and** **14** bear like reference numerals, and certain aspects of **Figure 13** have been omitted from **Figure 14** in order to avoid obscuring other aspects of **Figure 14****.**

**Figure 14** illustrates that the processors 1370, 1380 may include integrated memory and I/O control logic ("CL") 1372 and 1382, respectively. Thus, the CL 1372, 1382 include integrated memory controller units and include I/O control logic. **Figure 14** illustrates that not only are the memories 1332, 1334 coupled to the CL 1372, 1382, but also that I/O devices 1414 are also coupled to the control logic 1372, 1382. Legacy I/O devices 1415 are coupled to the chipset 1390.

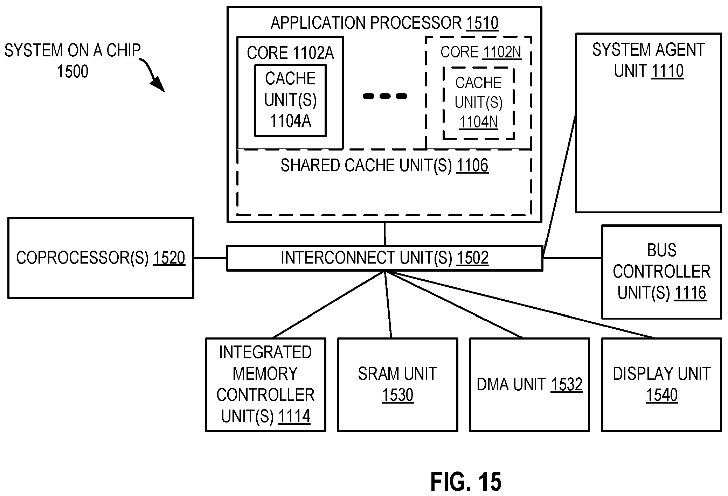

Referring now to **Figure 15****,** shown is a block diagram of a SoC 1500 in accordance with an embodiment of the present disclosure. Similar elements in **Figure 11** bear like reference numerals. Also, dashed lined boxes are optional features on more advanced SoCs. In **Figure 15****,** an interconnect unit(s) 1502 is coupled to: an application processor 1510 which includes a set of one or more cores 11202A-N and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

Embodiments (e.g., of the mechanisms) disclosed herein may be implemented in hardware, software, firmware, or a combination of such implementation approaches. Embodiments of the disclosure may be implemented as computer programs or program code executing on programmable systems comprising at least one processor, a storage system (including volatile and non-volatile memory and/or storage elements), at least one input device, and at least one output device.

Program code, such as code 1330 illustrated in **Figure 13****,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the disclosure also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

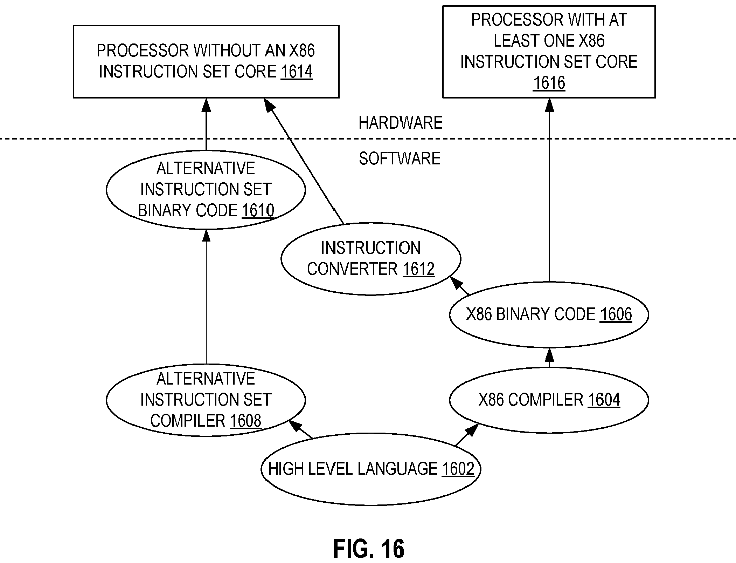

**Figure 16** is a block diagram contrasting the use of a software instruction converter to convert binary instructions in a source instruction set to binary instructions in a target instruction set according to embodiments of the disclosure. In the illustrated embodiment, the instruction converter is a software instruction converter, although alternatively the instruction converter may be implemented in software, firmware, hardware, or various combinations thereof. **Figure 16** shows a program in a high level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel^{®} processor with at least one x86 instruction set core by compatibly executing or otherwise processing (1) a substantial portion of the instruction set of the Intel^{®} x86 instruction set core or (2) object code versions of applications or other software targeted to run on an Intel^{®} processor with at least one x86 instruction set core, in order to achieve substantially the same result as an Intel^{®} processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, **Figure 16** shows the program in the high level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

## Claims

1. An apparatus comprising:
a decoder circuit to decode one or more instructions into a first micro-operation to load data from a data cache, a second micro-operation dependent on the first micro-operation, and a third micro-operation dependent on the second micro-operation;
an execution circuit to execute the first micro-operation, the second micro-operation, and the third micro-operation; and
a reservation station circuit comprising a load speculation tracker circuit and coupled between the decoder circuit and the execution circuit, the load speculation tracker circuit to, for a reservation station entry of the third micro-operation, track progress of the first micro-operation in the data cache to generate a cancellation indication for the third micro-operation in response to a miss of the data in the data cache for the first micro-operation, wherein the load speculation tracker circuit is to begin to track the progress of the first micro-operation in the data cache in response to a dispatch of the first micro-operation into the data cache..

2. The apparatus of claim 1, wherein the data cache comprises a plurality of pipelined stages, and the load speculation tracker circuit is to only track progress of the first micro-operation in a proper subset of the plurality of pipelined stages that includes a pipeline stage that determines if there is the miss of the data in the data cache.

3. The apparatus of claim 1, wherein the data cache comprises a plurality of pipelined stages, and the load speculation tracker circuit is to only track progress of the first micro-operation in a second pipeline stage, of the plurality of pipelined stages, that determines if there is the miss of the data in the data cache and a first pipeline stage immediately prior to the second pipeline stage.

4. The apparatus of any one of claims 1-3, wherein the cancellation indication is to cancel the third micro-operation before it wakes up a dependent micro-operation.

5. The apparatus of any one of claims 1-4, wherein the reservation station circuit comprises a unified speculation status propagation and execution matrix circuit, including the reservation station entry, to send a status indication of the progress of the first micro-operation in the data cache to the reservation station entry for the third micro-operation, and send a wakeup indication to a reservation station entry for a micro-operation when one or more producer micro-operations of that micro-operation are dispatched for execution.

6. The apparatus of any one of claims 1-5, wherein the reservation station circuit comprises a first picker circuit to send for execution a micro-operation that receives its ready for execution indication in a current cycle and a second picker circuit to send for execution a micro-operation that received its ready for execution indication in a previous cycle.

7. The apparatus of claim 6, wherein the reservation station circuit further comprises a counter to count a number of cycles that one or more operands of each of a plurality of micro-operations are ready for execution.

8. The apparatus of claim 6, further comprising a second execution circuit, wherein the execution circuit comprises a single cycle resultant bypass input, the second execution circuit does not comprise a single cycle resultant bypass input, and the first picker circuit is to send micro-operations for execution on the execution circuit and the second picker circuit is to send micro-operations for execution on the second execution circuit but not the execution circuit.

9. The apparatus of any one of claims 1-8, wherein the second micro-operation indirectly depends on the first micro-operation via a chained dependency on a micro-operation that directly depends on the first micro-operation.

10. A method comprising:
decoding one or more instructions with a decoder circuit of a processor into a first micro-operation to load data from a data cache of the processor, a second micro-operation dependent on the first micro-operation, and a third micro-operation dependent on the second micro-operation;
populating a reservation station entry of a reservation station circuit of the processor for the third micro-operation; and
in response to the populating the reservation station entry for the third micro-operation, tracking, by a load speculation tracker circuit of the reservation station circuit, progress of the first micro-operation in the data cache to generate a cancellation indication for the third micro-operation in response to a miss of the data in the data cache for the first micro-operation, wherein the load speculation tracker circuit begins the tracking of the progress of the first micro-operation in the data cache in response to a dispatch of the first micro-operation into the data cache.

11. The method of claim 10, wherein the data cache comprises a plurality of pipelined stages, and further comprising only tracking the progress of the first micro-operation by the load speculation tracker circuit in a proper subset of the plurality of pipelined stages that includes a pipeline stage that determines if there is the miss of the data in the data cache.

12. The method of claim 10, wherein the data cache comprises a plurality of pipelined stages, and further comprising only tracking the progress of the first micro-operation by the load speculation tracker circuit in a second pipeline stage, of the plurality of pipelined stages, that determines if there is the miss of the data in the data cache and a first pipeline stage immediately prior to the second pipeline stage.

13. The method of any one of claims 10-12, wherein the cancellation indication cancels the third micro-operation picked for execution before it wakes up a dependent micro-operation.

14. The method of any one of claims 10-13, wherein the reservation station circuit comprises a unified speculation status propagation and execution matrix circuit, including the reservation station entry, and further comprising sending, by the unified speculation status propagation and execution matrix circuit, a status indication of the progress of the first micro-operation in the data cache to the reservation station entry for the third micro-operation, and sending a wakeup indication to a reservation station entry for a micro-operation when one or more producer micro-operations of that micro-operation are dispatched for execution.

15. The method of any one of claims 10-14, further comprising:
sending for execution, by a first picker circuit of the reservation station circuit, a micro-operation that receives its ready for execution indication in a current cycle; and
sending for execution, by a second picker circuit of the reservation station circuit, a micro-operation that received its ready for execution indication in a previous cycle.
